# EUROPEAN PATENT APPLICATION

(11) **EP 4 615 039 A1**
(43) Date of publication of application: **10.09.2025**
(21) Application number: 23884808.9
(22) Date of filing: 30.10.2023
(51) Int. Cl.: H04W 24/08

(54) **METHOD AND APPARATUS FOR NODE USED FOR WIRELESS COMMUNICATION**

(30) Priority: 02.11.2022 CN 202211359899
(71) Applicant: Apogee Networks, LLC, Dallas, TX 75201 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2023/127587
(87) International publication number: WO 2024/093877

(57) **Abstract**

Disclosed in the present application are a method and apparatus for a node used for wireless communication. A first node receives a reference information block and a first information block. The reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

## Description

### Technical Field

The present application relates to a transmission method and apparatus for a wireless communication system, especially a transmission method and apparatus for wireless signals in a wireless communication system supporting a cellular network.

### Background Art

In the existing NR (New Radio) system, spectrum resources are statically divided into an FDD (Frequency Division Duplexing) spectrum and a TDD (Time Division Duplexing) spectrum. For the TDD spectrum, a base station and user equipment are both operated in a half-duplex mode. This half-duplex mode avoids a self-interference and can alleviate the impact of a cross-link interference, but it also brings about a decrease in resource utilization rate and an increase in latency. In view of these problems, supporting a flexible duplex mode on the TDD spectrum or the FDD spectrum has become a possible solution. At the 3GPP RAN (Radio Access Network) 1 #103e meeting, research on a duplex technology was agreed. Therein, subband nonoverlapping full duplex was proposed, i.e., a base station device is supported to simultaneously perform sending and receiving on two subbands. Communications under this mode will suffer from serious interferences, including the self-interference and the cross-link interference.

### Summary of the Invention

The inventor found by research that how to determine an RS (Reference Signal) resource used for radio link quality evaluation is a key issue.

In view of the above-mentioned problem, the present application discloses a solution. It should be explained that in the description of the present application, the flexible duplex mode is only used as a typical application scenario or example; and the present application can also be applied to application scenarios under a half-duplex mode. Further, the use of a unified design solution for different scenarios (including but not limited to SBFD, other flexible duplex modes or full-duplex modes, variable link direction modes, traditional duplex modes, half-duplex modes, etc.) can also facilitate the reduction of hardware complexity and costs. In the absence of conflicts, the embodiments in any node of the present application and the features in the embodiments can be applied to any other node. In the absence of conflicts, the embodiments of the present application and the features in the embodiments can be arbitrarily combined with each other.

As one embodiment, the interpretation of the terminologies in the present application refers to the definition of the 3GPP specification protocol TS36 series.

As one embodiment, the interpretation of the terminologies in the present application refers to the definition of the 3GPP standard protocol TS38 series.

As one embodiment, the interpretation of the terminologies in the present application refers to the definition of the 3GPP standard protocol TS37 series.

As one embodiment, the interpretation of the terminologies in the present application refers to the definition of the standard protocol of the IEEE (Institute of Electrical and Electronics Engineers).

The present application discloses a method for a first node used for wireless communication, comprising:
receiving a reference information block and a first information block;
wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, the problem to be solved by the present application comprises: how to determine a reference signal resource used for radio link quality evaluation.

According to one aspect of the present application, it is characterized by comprising:
receiving first signaling; and
sending a first signal in a first time-frequency resource group;
wherein the first signaling indicates scheduling information of the first signal, the first time-frequency resource group belongs to the first time-frequency resource set, and at least one symbol in the first time-frequency resource group is configured by a higher layer parameter as a DL symbol.

According to one aspect of the present application, it is characterized in that the air interface resource comprises a time domain resource, and the first time-frequency resource set comprises at least one symbol in a time domain; and any monitored PDCCH candidate in any CORESET in the first CORESET group and the first time-frequency resource set are orthogonal in the time domain.

According to one aspect of the present application, it is characterized in that the first CORESET group is determined by sorting CORESETs in the first CORESET pool according to a first rule; and the first rule depends on the relationship between the air interface resource occupied by the monitored PDCCH candidate in the CORESET in the first CORESET pool and the first time-frequency resource set.

According to one aspect of the present application, it is characterized by comprising:
when a value of a target counter is equal to or greater than a target threshold value, triggering beam failure recovery for a first serving cell;
wherein the first BWP is one BWP of the first serving cell; when radio link quality evaluated according to the first RS resource set is inferior to a reference threshold value, a physical layer of a first node sends to the higher layer a beam failure event indication for the first serving cell; and the target counter is used for counting the beam failure event indication for the first serving cell.

According to one aspect of the present application, it is characterized in that the radio link quality evaluation of the first BWP comprises: respectively evaluating the radio link quality according to the first RS resource set and a second RS resource set; the reference information block is used for configuring a second CORESET pool on the first BWP, the second RS resource set depends on a TCI state of a second CORESET group, and the second CORESET group comprises at least one CORESET in the second CORESET pool; and the second CORESET group at least depends on a relationship between an air interface resource occupied by a monitored PDCCH candidate in a CORESET in the second CORESET pool and the first time-frequency resource set.

According to one aspect of the present application, it is characterized in that the radio link quality evaluation of the first BWP comprises: respectively evaluating the radio link quality according to the first RS resource set and a second RS resource set; the second RS resource set depends on a TCI state of a second CORESET group, and the second CORESET group comprises at least one CORESET in the first CORESET pool; and the second CORESET group at least depends on the relationship between the air interface resource occupied by the monitored PDCCH candidate in the CORESET in the first CORESET pool and the first time-frequency resource set.

According to one aspect of the present application, it is characterized in that when radio link quality evaluated according to the first RS resource set is inferior to a reference threshold value, a physical layer of a first node sends to a higher layer a beam failure event indication for the first RS resource set; when the radio link quality evaluated according to the second RS resource set is inferior to the reference threshold value, the physical layer of the first node sends to the higher layer a beam failure event indication for the second RS resource set; a first counter is used for counting the beam failure event indication for the first RS resource set, and a second counter is used for counting the beam failure event indication for the second RS resource set; when a value of the first counter is equal to or greater than a first threshold value, beam failure recovery for the first RS resource set is triggered; and when a value of the second counter is equal to or greater than a second threshold value, beam failure recovery for the second RS resource set is triggered.

The present application discloses a method for a second node used for wireless communication, comprising:
sending a reference information block and a first information block;
wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

According to one aspect of the present application, it is characterized by comprising:
sending first signaling; and
receiving a first signal in a first time-frequency resource group;
wherein the first signaling indicates scheduling information of the first signal, the first time-frequency resource group belongs to the first time-frequency resource set, and at least one symbol in the first time-frequency resource group is configured by a higher layer parameter as a DL symbol.

According to one aspect of the present application, it is characterized in that the air interface resource comprises a time domain resource, and the first time-frequency resource set comprises at least one symbol in a time domain; and any monitored PDCCH candidate in any CORESET in the first CORESET group and the first time-frequency resource set are orthogonal in the time domain.

According to one aspect of the present application, it is characterized in that the first CORESET group is determined by sorting CORESETs in the first CORESET pool according to a first rule; and the first rule depends on the relationship between the air interface resource occupied by the monitored PDCCH candidate in the CORESET in the first CORESET pool and the first time-frequency resource set.

According to one aspect of the present application, it is characterized in that a recipient of the first information block triggers beam failure recovery for the first serving cell when a value of a target counter is equal to or greater than a target threshold value, wherein the first BWP is one BWP of the first serving cell; when radio link quality evaluated according to the first RS resource set is inferior to a reference threshold value, a physical layer of the recipient of the first information block sends to a higher layer a beam failure event indication for the first serving cell; and the target counter is used for counting the beam failure event indication for the first serving cell.

According to one aspect of the present application, it is characterized in that the radio link quality evaluation of the first BWP comprises: respectively evaluating the radio link quality according to the first RS resource set and a second RS resource set; the reference information block is used for configuring a second CORESET pool on the first BWP, the second RS resource set depends on a TCI state of a second CORESET group, and the second CORESET group comprises at least one CORESET in the second CORESET pool; and the second CORESET group at least depends on a relationship between an air interface resource occupied by a monitored PDCCH candidate in a CORESET in the second CORESET pool and the first time-frequency resource set.

According to one aspect of the present application, it is characterized in that the radio link quality evaluation of the first BWP comprises: respectively evaluating the radio link quality according to the first RS resource set and a second RS resource set; the second RS resource set depends on a TCI state of a second CORESET group, and the second CORESET group comprises at least one CORESET in the first CORESET pool; and the second CORESET group at least depends on the relationship between the air interface resource occupied by the monitored PDCCH candidate in the CORESET in the first CORESET pool and the first time-frequency resource set.

According to one aspect of the present application, it is characterized in that when the radio link quality evaluated according to the first RS resource set is inferior to a reference threshold value, a physical layer of the recipient of the first information block sends to the higher layer the beam failure event indication for the first RS resource set; when the radio link quality evaluated according to the second RS resource set is inferior to the reference threshold value, the physical layer of the recipient of the first information block sends to the higher layer the beam failure event indication for the second RS resource set; a first counter is used for counting the beam failure event indication for the first RS resource set, and a second counter is used for counting the beam failure event indication for the second RS resource set; when a value of the first counter is equal to or greater than a first threshold value, beam failure recovery for the first RS resource set is triggered; and when a value of the second counter is equal to or greater than a second threshold value, beam failure recovery for the second RS resource set is triggered.

The present application discloses a first node device used for wireless communication, comprising:
a first receiver for receiving a reference information block and a first information block;
wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

The present application discloses a second node device used for wireless communication, comprising:
a second transmitter for sending a reference information block and a first information block;
wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, compared with a traditional solution, the present application has the following advantages:
- In determining the reference signal resource used for the radio link quality evaluation, an influence of the air interface resource is considered.
- Different air interface resources can be applied to different scenarios, such as different duplex modes, different interference environments, different antennas, different spatial characteristics, etc.

### Brief Description of the Drawings

Other features, purposes, and advantages of the present application will become more apparent by reading the detailed description of the non-limiting embodiments with reference to the following figures:
FIG. 1 shows a flow chart of a reference information block and a first information block according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a flow chart of a transmission according to one embodiment of the present application;
FIGS. 6A-6C respectively show a schematic diagram of a first time-frequency resource set according to one embodiment of the present application;
FIGS. 7A-7C respectively show a schematic diagram of a first CORESET group according to one embodiment of the present application;
FIG. 8 shows a schematic diagram of a first CORESET group according to another embodiment of the present application;
FIG. 9 shows a schematic diagram of a second RS resource set according to one embodiment of the present application;
FIG. 10 shows a schematic diagram of a second RS resource set according to another embodiment of the present application;
FIG. 11 shows a schematic diagram of triggering of beam failure recovery according to one embodiment of the present application;
FIG. 12 shows a schematic diagram of triggering of beam failure recovery according to another embodiment of the present application;
FIG. 13 shows a structural block diagram of a processing device for use in a first node device according to one embodiment of the present application; and
FIG. 14 shows a structural block diagram of a processing device for use in a second node device according to one embodiment of the present application.

### Detailed Description of Embodiments

The technical solution of the present application will be further described in detail below in conjunction with the accompanying drawings. It should be explained that in the absence of conflicts, the embodiments in the present application and the features in the embodiments can be arbitrarily combined with each other.

### Embodiment 1

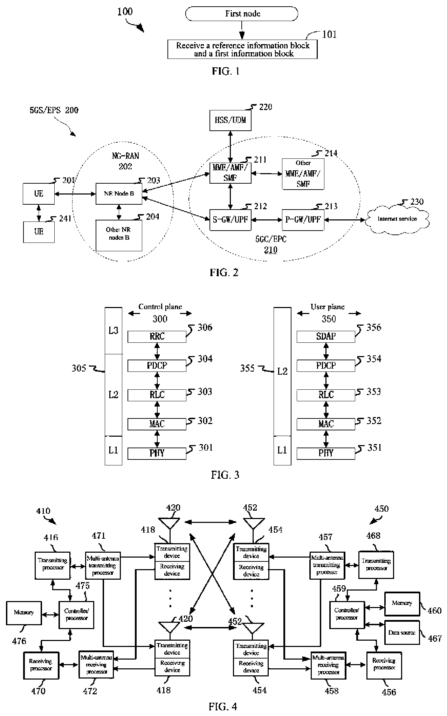

Embodiment 1 illustrates a flow chart of a reference information block and a first information block according to one embodiment of the present application, as shown in FIG. 1. In 100 shown in FIG. 1, each block represents one step.

In Embodiment 1, in step 101, a first node in the present application receives a reference information block and a first information block, wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, the reference information block and the first information block are carried by the same signaling.

As one embodiment, the reference information block and the first information block are carried by different signaling.

As one embodiment, the reference information block is received earlier than the first information block.

As one embodiment, the reference information block is received no earlier than the first information block.

As one embodiment, the reference information block and the first information block are simultaneously received.

As one embodiment, the reference information block comprises an RRC message.

As one embodiment, the reference information block comprises at least the RRC message of the RRC message or an MAC CE message.

As one embodiment, the reference information block comprises the RRC message and the MAC CE message.

As one embodiment, the reference information block comprises parts or all of the fields in one or more RRC IEs (Information Elements).

As one embodiment, the reference information block comprises parts or all of the fields in one RRC IE.

As one embodiment, the reference information block comprises parts or all of the fields in at least one RRC IE.

As one embodiment, the reference information block comprises a controlResourceSetToAddModList field in the RRC IE.

As one embodiment, the reference information block comprises a field with controlResourceSetToAddModList included in the name in the RRC IE.

As one embodiment, the reference information block comprises a field with controlResourceSet included in the name in the RRC IE.

As one embodiment, the reference information block indicates an index of a CORESET in a first CORESET (COntrol REsource SET) pool on a first BWP (BandWidth Part).

As one embodiment, the reference information block indicates configuration information of the CORESET in the first CORESET pool on the first BWP.

As one embodiment, "a CORESET in the first CORESET pool" means: any CORESET in the first CORESET pool.

As one embodiment, "a CORESET in the first CORESET pool" means: each CORESET in the first CORESET pool.

As one embodiment, "a CORESET in the first CORESET pool" means: at least one CORESET in the first CORESET pool.

As one embodiment, "a CORESET in the first CORESET pool" means: parts of CORESETs in the first CORESET pool.

As one embodiment, "a CORESET in the first CORESET pool" means: all CORESETs in the first CORESET pool.

As one embodiment, configuration information of one CORESET comprises a corresponding index, an occupied RB (Resource Block), an occupied consecutive symbol, a TCI (Transmission Configuration Indication) state, a CCE (Control channel element) to REG (Resource Element Group) mapping parameter, a precoder granularity, and a DM-RS scrambling sequence initialization value.

As one embodiment, the configuration information of one CORESET comprises the corresponding index, the occupied RB, the occupied consecutive symbol, and the TCI state.

Typically, the TCI state in the configuration information of one CORESET indicates quasi co-location (QCL) of an antenna port of the one CORESET.

As one embodiment, the first CORESET pool comprises one or more CORESETs.

As one embodiment, the first CORESET pool comprises a plurality of CORESETs.

As one embodiment, the first CORESET pool comprises at most 3 CORESETs.

As one embodiment, the first CORESET pool comprises at most 5 CORESETs.

As one embodiment, the radio link quality evaluation is used for beam failure monitoring.

As one embodiment, the radio link quality evaluation comprises judging whether the radio link quality is inferior to a reference threshold value.

As one embodiment, the radio link quality is RSRP.

As one embodiment, the radio link quality is L1-RSRP.

As one embodiment, the radio link quality is SINR.

As one embodiment, the radio link quality is L1-SINR.

As one embodiment, the radio link quality is BLER.

As one embodiment, the radio link quality is a hypothetical BLER.

As one embodiment, only the first RS resource set is used for the radio link quality evaluation of the first BWP.

As one embodiment, the first RS resource set and RS resources outside the first RS resource set are used for the radio link quality evaluation of the first BWP.

As one embodiment, the first RS resource set and the second RS resource set are used for the radio link quality evaluation of the first BWP.

As one embodiment, the radio link quality evaluation of the first BWP comprises: evaluating the radio link quality according to the first RS resource set.

As one embodiment, the radio link quality evaluation of the first BWP comprises: respectively evaluating the radio link quality according to the first RS resource set and the second RS resource set.

As one embodiment, the radio link quality evaluation of the first BWP means: evaluating the radio link quality according to the first RS resource set.

As one embodiment, the radio link quality evaluation of the first BWP means: respectively evaluating the radio link quality according to the first RS resource set and the second RS resource set.

As one embodiment, the meaning of "evaluating the radio link quality according to a given RS resource set" means: evaluating the radio link quality according to all RS resources in a given RS resource set.

As one embodiment, the radio link quality is one of RSRP (Reference Signal Received Power), L1-RSRP (Layer1-RSRP), SINR (Signal to Interference plus Noise Ratio), or L1-SINR (Layer1-SINR), and the meaning of "evaluating the radio link quality according to a given RS resource set" comprises: the radio link quality is a maximum value of the RSRP, the L1-RSRP, the SINR, or the L1-SINR measured based on all RS resources in the given RS resource set.

As one embodiment, the radio link quality is the BLER (BLock Error Rate), and the meaning of "evaluating the radio link quality according to a given RS resource set" comprises: the radio link quality is a minimum value of the BLER measured based on all RS resources in the given RS resource set.

As one embodiment, the radio link quality is a hypothetical BLER, and the meaning of "evaluating the radio link quality according to a given RS resource set" comprises: the radio link quality is a minimum value of the hypothetical BLER measured based on all RS resources in the given RS resource set.

As one embodiment, the radio link quality is one of the RSRP, the L1-RSRP, the SINR, or the L1-SINR, and the meaning of "evaluating the radio link quality according to a given RS resource set" comprises: the radio link quality is an average value of the RSRP, the L1-RSRP, the SINR, or the L1-SINR measured based on all RS resources in the given RS resource set.

As one embodiment, the radio link quality is the BLER, and the meaning of "evaluating the radio link quality according to a given RS resource set" comprises: the radio link quality is an average value of the BLER measured based on all RS resources in the given RS resource set.

As one embodiment, the radio link quality is a hypothetical BLER, and the meaning of "evaluating the radio link quality according to a given RS resource set" comprises: the radio link quality is an average value of the hypothetical BLER measured based on all RS resources in the given RS resource set.

As one embodiment, the given RS resource set is the second RS resource set.

As one embodiment, the given RS resource set is the first RS resource set.

As one embodiment, the meaning of the sentence "the first RS resource set depends on a TCI (Transmission Configuration Indication) state of a first CORESET group" comprises: any RS resource in the first RS resource set depends on the TCI state of one CORESET in the first CORESET group.

As one embodiment, the meaning of the sentence "the first RS resource set depends on a TCI state of a first CORESET group" comprises: at least one RS resource in the first RS resource set depends on the TCI state of one CORESET in the first CORESET group.

As one embodiment, the meaning of the sentence "the first RS resource set depends on a TCI state of a first CORESET group" comprises: at least one RS resource in the first RS resource set depends on the TCI state of one CORESET in the first CORESET group.

As one embodiment, the meaning of the sentence "the first RS resource set depends on the TCI state of the first CORESET group" comprises: one RS resource set of the first RS resource set depends on the TCI state of at least one CORESET in the first CORESET group.

As one embodiment, the meaning of the sentence "the first RS resource set depends on a TCI state of a first CORESET group" comprises: one RS resource set of the first RS resource set depends on the TCI state of any CORESET in the first CORESET group.

As one embodiment, the meaning of the sentence "a given RS resource depends on a TCI state of a given CORESET" comprises: the given RS resource is determined according to the TCI state of the given CORESET.

As one embodiment, the meaning of the sentence "a given RS resource depends on a TCI state of a given CORESET" comprises: the given RS resource is determined according to the TCI state of the given CORESET used by the first node for monitor the PDCCH.

As one embodiment, the meaning of the sentence "a given RS resource depends on a TCI state of a given CORESET" comprises: an index of the given RS resource is the same as an index of one RS resource indicated by the TCI state of the given CORESET.

As one embodiment, the meaning of the sentence "a given RS resource depends on a TCI state of a given CORESET" comprises: an index of the given RS resource is the same as an index of one RS resource indicated by the TCI state of the given CORESET.

As one embodiment, the meaning of the sentence "a given RS resource depends on a TCI state of a given CORESET" comprises: the index of the given RS resource is the same as the index of one RS resource in the RS resource set indicated by the TCI state of the given CORESET.

As one embodiment, the meaning of the sentence "a given RS resource depends on a TCI state of a given CORESET" comprises: the given RS resource is a periodic CSI-RS resource, and the index of the given RS resource is the same as the index of one RS resource in the RS resource set indicated by the TCI state of the given CORESET.

As one embodiment, the given RS resource is one RS resource in the first RS resource set, and the given CORESET is one CORESET in the first CORESET group.

As one embodiment, the given RS resource is one RS resource in the second RS resource set, and the given CORESET is one CORESET in a second CORESET group.

As one embodiment, one TCI state indicates at least one RS resource and the type of a quasi-co-location parameter corresponding to each RS resource therein.

As one embodiment, the types of the quasi-co-location parameters comprise TypeA, TypeB, TypeC, and TypeD.

As one embodiment, the quasi-co-location parameters of TypeA comprise Doppler shift, Doppler spread, average delay, and delay spread.

As one embodiment, the quasi-co-location parameters of TypeB comprise the Doppler shift and the Doppler spread.

As one embodiment, the quasi-co-location parameters of TypeC comprise the Doppler shift and the average delay.

As one embodiment, the quasi-co-location parameters of TypeD comprise a spatial Rx parameter.

As one embodiment, for the specific definitions of TypeA, TypeB, TypeC and TypeD, refer to Section 5.1.5 of 3GPP TS38.214.

As one embodiment, the quasi-co-location parameters comprise one or more of the delay spread, the Doppler spread, the Doppler shift, the average delay, or the spatial Rx parameter.

As one embodiment, the quasi-co-location parameters comprise the Doppler shift and the Doppler spread.

As one embodiment, the quasi-co-location parameters comprise the Doppler shift and the average delay.

As one embodiment, the quasi-co-location parameters comprise the spatial Rx parameter.

As one embodiment, the quasi-co-location parameters comprise at least one of a spatial transmitting parameter or the spatial Rx parameter.

As one embodiment, the quasi-co-location parameters comprise a spatial domain receive filter.

As one embodiment, the quasi-co-location parameters comprise a spatial domain filter.

As one embodiment, the quasi-co-location parameters comprises at least one of a spatial domain transmit filter or the spatial domain receive filter.

As one embodiment, the first time-frequency resource set is configured for the first BWP.

As one embodiment, the first time-frequency resource set is configured for a serving cell where the first BWP is located.

As one embodiment, the first time-frequency resource set is configured for an uplink BWP.

As one embodiment, the first time-frequency resource set is configured for a downlink BWP.

As one embodiment, the first BWP is one downlink BWP.

As one embodiment, the first BWP is one downlink BWP, and the first time-frequency resource set is configured for the uplink BWP corresponding to the first BWP.

As one embodiment, the first information block is carried by higher layer signaling.

As one embodiment, the first information block is carried by RRC (Radio Resource Control) signaling.

As one embodiment, the first information block comprises all or parts of fields in one RRC IE (Information Element).

As one embodiment, the first information block comprises all or parts of fields in each RRC IE of a plurality of RRC IEs.

As one embodiment, the first information block comprises all or parts of fields in a TDD-UL-DL-ConfigCommon IE.

As one embodiment, the first information block comprises all or parts of fields in a TDD-UL-DL-ConfigDedicated IE.

As one embodiment, the first information block comprises all or parts of fields in a ServingCellConfig IE.

As one embodiment, the first information block comprises all or parts of fields in a ServingCellConfigCommonSIB IE.

As one embodiment, the first information block comprises information in all or parts of fields in a ServingCellConfigCommon IE.

As one embodiment, the first information block is carried by at least one RRC IE.

As one embodiment, the name of one IE carrying the first information block comprises *TDD-UL-DL-Config.*

As one embodiment, the name of one IE carrying the first information block comprises *ServingCellConfig.*

As one embodiment, the first information block is carried by a MAC CE (Medium Access Control Layer Control Element).

As one embodiment, the first information block comprises a MAC CE.

As one embodiment, the first information block is transmitted on a downlink physical layer data channel (i.e., a downlink channel that can be used for carrying physical layer data).

As one embodiment, the first information block is transmitted on a PDSCH.

As one embodiment, the first information block is carried by DCI (Downlink control information).

As one embodiment, the first information block comprises DCI.

As one embodiment, the first information block comprises one or more fields in DCI.

As one embodiment, the first information block is carried by DCI format 2_0.

As one embodiment, the first information block comprises DCI format 2_0.

As one embodiment, the first information block is carried by the RRC signaling and the MAC CE.

As one embodiment, the first information block is carried by higher layer signaling and the DCI.

As one embodiment, the first information block is carried by an RRC signaling and a DCI signaling.

As one embodiment, the first information block is used for indicating the first time-frequency resource set.

As one embodiment, the first information block explicitly indicates the first time-frequency resource set.

As one embodiment, the first information block implicitly indicates the first time-frequency resource set.

As one embodiment, the first information block indicates time domain resources occupied by the first time-frequency resource set and frequency domain resources occupied by the first time-frequency resource set.

As one embodiment, the first information block indicates a period and a time offset of the first time-frequency resource set in a time domain.

As one embodiment, the first information block indicates the time domain resources included in the first time-frequency resource set within one period.

As one embodiment, the first information block indicates symbols included in the first time-frequency resource set within one period.

As one embodiment, the first information block indicates slots included in the first time-frequency resource set within one period.

As one embodiment, the first information block indicates the RBs (Resource Blocks) included in the first time-frequency resource set in a frequency domain.

As one embodiment, the first information block indicates subcarriers included in the first time-frequency resource set in the frequency domain.

As one embodiment, a sender of the first information block supports simultaneously receiving and sending wireless signals in the time domain resources occupied by the first time-frequency resource set.

As one embodiment, the sender of the first information block simultaneously receives and sends wireless signals in the time domain resources occupied by the first time-frequency resource set.

As one embodiment, the first time-frequency resource set comprises a positive integer number of symbols in the time domain.

As one embodiment, the first time-frequency resource set comprises one or more symbols in the time domain.

As one embodiment, the first time-frequency resource set comprises at least one slot in the time domain.

As one embodiment, the first time-frequency resource set comprises at least one subframe in the time domain.

As one embodiment, the first time-frequency resource set comprises at least one RB in the first BWP in the frequency domain.

As one embodiment, the symbol is a single carrier symbol.

As one embodiment, the symbol is a multi-carrier symbol.

As one embodiment, the multi-carrier symbol is an OFDM (Orthogonal Frequency Division Multiplexing) symbol.

As one embodiment, the symbol is obtained after OFDM symbol generation of an output of transform precoding.

As one embodiment, the multi-carrier symbol is an SC-FDMA (Single Carrier-Frequency Division Multiple Access) symbol.

As one embodiment, the multi-carrier symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, the meaning of the sentence "the first CORESET group at least depends on a relationship between an air interface resource occupied by a monitored PDCCH candidate in a CORESET in the first CORESET pool and the first time-frequency resource set" comprises: the first CORESET group only depends on the relationship between the air interface resource occupied by the monitored PDCCH candidate in the CORESET in the first CORESET pool and the first time-frequency resource set.

As one embodiment, the meaning of the sentence "the first CORESET group at least depends on a relationship between an air interface resource occupied by a monitored PDCCH candidate in a CORESET in the first CORESET pool and the first time-frequency resource set" comprises: the first CORESET group at least depends on the relationship between the air interface resource occupied by the monitored PDCCH candidate in the CORESET in the first CORESET pool and the first time-frequency resource set, and the first CORESET group also comprises CORESETs outside the first CORESET pool.

As one embodiment, the meaning of the sentence "the first CORESET group at least depends on a relationship between an air interface resource occupied by a monitored PDCCH candidate in a CORESET in the first CORESET pool and the first time-frequency resource set" comprises: the air interface resource comprises the time domain resource, and the first time-frequency resource set comprises at least one symbol in the time domain; and Any monitored PDCCH candidate in at least one CORESET in the first CORESET group and the first time-frequency resource set are orthogonal in the time domain.

As one embodiment, the meaning of the sentence "the first CORESET group at least depends on a relationship between an air interface resource occupied by a monitored PDCCH candidate in a CORESET in the first CORESET pool and the first time-frequency resource set" comprise: the air interface resource comprises the frequency domain resource; and Any monitored PDCCH candidate in the at least one CORESET in the first CORESET group and the first time-frequency resource set are orthogonal in the frequency domain.

As one embodiment, the meaning of the sentence "the first CORESET group at least depends on a relationship between an air interface resource occupied by a monitored PDCCH candidate in a CORESET in the first CORESET pool and the first time-frequency resource set" comprises: the air interface resource comprises the time-frequency resource; and any monitored PDCCH candidate in the at least one CORESET in the first CORESET group is orthogonal to the first time-frequency resource set.

As one embodiment, the meaning of the sentence "an air interface resource occupied by a monitored PDCCH candidate in a CORESET in the first CORESET pool" comprises: the air interface resources occupied by the monitored PDCCH candidates in each CORESET in the first CORESET pool.

As one embodiment, the meaning of the sentence "an air interface resource occupied by a monitored PDCCH candidate in a CORESET in the first CORESET pool" comprises: the air interface resources occupied by the monitored PDCCH candidates in at least one CORESET in the first CORESET pool.

As one embodiment, the air interface resource comprises the time domain resource.

As one embodiment, the air interface resource comprises the frequency domain resource.

As one embodiment, the air interface resource comprises the time-frequency resource.

As one embodiment, the air interface resource comprises the time domain resource, and the meaning of the phrase "a relationship between an air interface resource occupied by a monitored PDCCH candidate in a CORESET in the first CORESET pool and the first time-frequency resource set" comprises: a relationship between the time domain resource occupied by the monitored PDCCH candidate in the CORESET in the first CORESET pool and the time domain resource occupied by the first time-frequency resource set.

As one embodiment, the air interface resource comprises the frequency domain resource, and the meaning of the phrase "a relationship between an air interface resource occupied by a monitored PDCCH candidate in a CORESET in the first CORESET pool and the first time-frequency resource set" comprises: a relationship between the frequency domain resource occupied by the monitored PDCCH candidate in the CORESET in the first CORESET pool and the frequency domain resource occupied by the first time-frequency resource set.

As one embodiment, the air interface resource comprises the time-frequency resource, and the meaning of the phrase "a relationship between an air interface resource occupied by a monitored PDCCH candidate in a CORESET in the first CORESET pool and the first time-frequency resource set" comprises: a relationship between the time-frequency resource occupied by the monitored PDCCH candidate in the CORESET in the first CORESET pool and the first time-frequency resource set.

As one embodiment, the relationship means whether to be orthogonal.

As one embodiment, the relationship means whether to overlap.

As one embodiment, the air interface resource occupied by one monitored PDCCH candidate is determined by at least one of the CORESET where it is located or a search space set.

As one embodiment, the time domain resource occupied by one monitored PDCCH candidate is jointly determined by the CORESET where it is located and the search space set.

As one embodiment, the time-frequency resource occupied by one monitored PDCCH candidate is jointly determined by the CORESET where it is located and the search space set.

As one embodiment, the frequency domain resource occupied by one monitored PDCCH candidate is determined by the CORESET where it is located.

As one embodiment, the time-frequency resource occupied by one monitored PDCCH candidate belongs to the search space set associated with the CORESET where it is located.

As one embodiment, in the frequency domain, one monitored PDCCH candidate belongs to the CORESET where it is located.

As one embodiment, one monitored PDCCH candidate is one PDCCH candidate in the search space set associated with the CORESET where it is located.

As one embodiment, one monitored PDCCH candidate consists of at least one CCE in the CORESET where it is located.

As one embodiment, any monitored PDCCH candidate in the search space set associated with one CORESET consists of at least one CCE of the one CORESET.

As one embodiment, the meaning of the phrase "a search space set associated with one CORESET" comprises: one CORESET is used for determining the time-frequency resources occupied by the search space set associated with the one CORESET in one monitoring occasion.

As one embodiment, the meaning of the phrase "a search space set associated with one CORESET" comprises: one CORESET comprises the time-frequency resources occupied by the search space set associated with the one CORESET in one monitoring occasion.

As one embodiment, the meaning of the phrase "a search space set associated with one CORESET" comprises: REs occupied by one CORESET comprise REs occupied by the search space set associated with one CORESET in one monitoring occasion (Monitoring Occasion).

As one embodiment, the meaning of the phrase "a search space set associated with one CORESET" comprises: RB(s) occupied by one CORESET in the frequency domain comprise RB(s)occupied by the search space set associated with one CORESET in the frequency domain.

As one embodiment, the meaning of the phrase "a search space set associated with one CORESET" comprises: frequency domain resources occupied by one CORESET comprise frequency domain resources occupied by the search space set associated with one CORESET.

As one embodiment, the meaning of the phrase "a search space set associated with one CORESET" comprises: symbol(s) occupied by one CORESET is used for determining symbol(s) occupied by the search space set associated with one CORESET in one detection occasion.

As one embodiment, the meaning of the phrase "a search space set associated with one CORESET" comprises: the symbol(s) occupied by one CORESET comprises/comprise symbol(s) occupied by the search space set associated with one CORESET in one detection occasion.

As one embodiment, the meaning of the phrase "a search space set associated with one CORESET" comprises: configuration information of the search space set associated with one CORESET comprises an index of one CORESET.

As one embodiment, one monitoring occasion comprises one time period.

As one embodiment, one monitoring occasion comprises at least one symbol.

As one embodiment, one monitoring occasion comprises one slot.

As one embodiment, one monitoring occasion comprises one sub-slot.

As one embodiment, one monitoring occasion comprises one subframe.

### Embodiment 2

Embodiment 2 illustrates a schematic diagram of a network architecture according to one embodiment of the present application, as shown in FIG. 2.

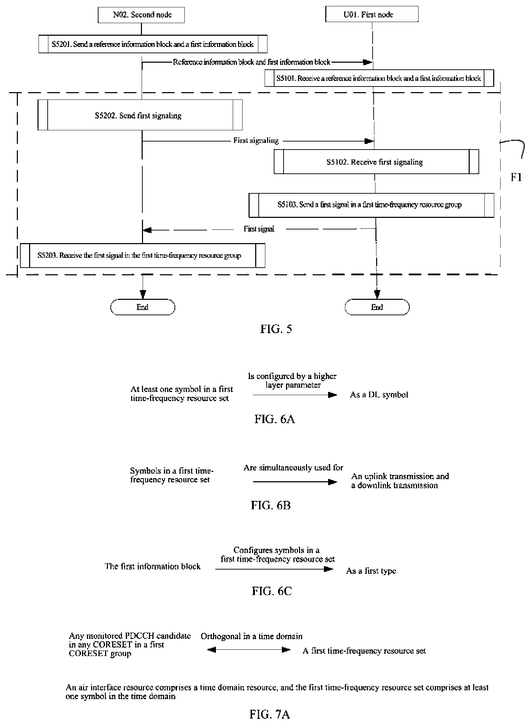

FIG. 2 illustrates a network architecture 200 of LTE (Long-Term Evolution), LTE-A (Long-Term Evolution Advanced) and future 5G systems. The network architecture 200 of LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terms. The 5GS/EPS200 may comprise one or more pieces of UE (User Equipment) 201, one piece of UE241 communicating with the UE201 via a sidelink, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. 5GS/EPS200 can be interconnected with other access networks, but for simplicity, these entities/interfaces are not shown. As shown in FIG. 2, 5GS/EPS200 provides a packet switching service, but those skilled the art will easily understand that the various concepts presented throughout the present application can be extended to a network that provides a circuit switching service. NG-RAN202 comprises an NR (New Radio) node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (transmission reception point), or some other suitable terms. The gNB203 provides an access point to 5GC/EPC210 for UE201. Examples of UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatus. Those skilled in the art may also call the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms. The gNB203 is connected to 5GC/EPC210 by an S1/NG interface. 5GC/EPC210 comprises an MME (Mobility Management Entity)/AMF (Authentication Management Field)/SMF (Session Management Function) 211, other MME/AMF/SMF214, S-GW (Service Gateway)/UPF (User Plane Function) 212, and a P-GW (Packet Date Network Gateway)/UPF213. The MME/AMF/SMF211 is a control node that processes signaling between UE201 and 5GC/EPC210. Generally, the MME/AMF/SMF211 provides bearer and connection management. All user IP (Internet Protocal) packets are communicated by the S-GW/UPF212, and the S-GW/UPF212 is itself connected to P-GW/UPF213. The P-GW provides UE IP address allocation and other functions. The P-GW/UPF213 is connected to the Internet service 230. The Internet service 230 comprises an Internet protocol service corresponding to an operator, which may specifically comprise the Internet, the intranet, an IMS (IP Multimedia Subsystem), and a packet switching service.

As one embodiment, the first node in the present application comprises the UE201.

As one embodiment, the first node in the present application comprises the UE241.

As one embodiment, the second node in the present application comprises the gNB203.

### Embodiment 3

Embodiment 3 illustrates a schematic diagram of an embodiment of radio protocol architectures for a user plane and a control plane according to one embodiment of the present application, as shown in FIG. 3.

Embodiment 3 shows a schematic diagram of an embodiment of radio protocol architectures for one user plane and one control plane according to the present application, as shown in FIG. 3. FIG. 3 is a schematic diagram illustrating an embodiment of radio protocol architectures for a user plane 350 and a control plane 300, and FIG. 3 exhibits the radio protocol architecture for the control plane 300 between a first communication node device (UE, gNB, or RSU in V2X) and a second communication node device (gNB, UE, or RSU in V2X) or between two pieces of UE by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is above PHY301 and is responsible for the link between the first communication node device and the second communication node device or between two pieces of UE. The L2 layer 305 comprises a MAC (Medium Access Control) sub-layer 302, an RLC (Radio Link Control) sub-layer 303, and a PDCP (Packet Data Convergence Protocol) sub-layer 304, which terminate at the second communication node device. The PDCP sub-layer 304 provides multiplexing between different radio bearer and logical channels. The PDCP sub-layer 304 also provides security by encrypting data packets, and provides zone-crossing mobility support between the second communication node devices for the first communication node device. The RLC sub-layer 303 provides segmentation and reassembly of upper-layer data packets, retransmission of lost data packets, and reordering of data packets to compensate for unordered reception caused by HARQ. The MAC sub-layer 302 provides multiplexing between logical and transmission channels. The MAC sub-layer 302 is also responsible for allocating, between the first communication node devices, various radio resources (for example, resource blocks) in one cell. The MAC sub-layer 302 is also responsible for HARQ operations. The RRC (Radio Resource Control) sub-layer 306 in the layer 3 (L3 layer) in the control plane 300 is responsible for obtaining radio resources (i.e., radio bearers) and configuring a lower layer by using the RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 for the physical layer 351, the PDCP sub-layer 354 in the L2 layer 355, the RLC sub-layer 353 in the L2 layer 355, and the MAC sub-layer 352 in the L2 layer 355 is substantially the same as that in the control plane 300 for the corresponding layers and sub-layers, but the PDCP sub-layer 354 also provides header compression for upper-layer data packets to reduce radio transmission overhead. The L2 layer 355 in the user plane 350 further comprises an SDAP (Service Data Adaptation Protocol) sub-layer 356, and the SDAP sub-layer 356 is responsible for mapping between a QoS stream and a data radio bearer (DRB) to support the diversity of services. Although not shown, the first communication node device may have several upper layers above the L2 layer 355, comprising a network layer (for example, an IP layer) terminated at P-GW on the network side and an application layer terminated at the connected other end (for example, remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the first signaling is generated in RRC sub-layer 306.

As one embodiment, the first signaling is generated in the MAC sub-layer 302 or the MAC sub-layer 352.

As one embodiment, the first signaling is generated in the PHY301 or the PHY351.

As one embodiment, a first signal is generated in the PHY301 or the PHY351.

As one embodiment, a reference information block is generated in the RRC sub-layer 306.

As one embodiment, the reference information block is generated in at least one of the RRC sub-layer 306 or the MAC sub-layer 302.

As one embodiment, the reference information block is generated in the RRC sub-layer 306 or the MAC sub-layer 302

As one embodiment, the reference information block is generated in the MAC sub-layer 302 and the MAC sub-layer 352.

As one embodiment, a first information block is generated in the RRC sub-layer 306.

As one embodiment, the first information block is generated in the MAC sub-layer 302 or the MAC sub-layer 352.

As one embodiment, the first information block is generated in at least one of the RRC sub-layer 306 or the MAC sub-layer 302.

As one embodiment, the first information block is generated in the RRC sub-layer 306 and the MAC sub-layer 302.

As one embodiment, the first information block is generated in the RRC sub-layer 306 and the PHY301.

As one embodiment, a target counter is generated in the MAC sub-layer 302.

As one embodiment, the first counter and a second counter are generated in the MAC sub-layer 302.

As one embodiment, a target counter is generated in the MAC sub-layer 352.

As one embodiment, the first counter and a second counter are generated in the MAC sub-layer 352.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

A first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

A second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

In a transmission from the first communication device 410 to the second communication device 450, at the first communication device 410, an upper-layer data packet from a core network is provided to the controller/processor 475. The controller/processor 475 implements the functionality of the L2 layer. In DL, the controller/processor 475 provides header compression, encryption, packet segmentation and reordering, multiplexing between logical and transmission channels, and radio resource allocation to the second communication device 450 based on various priority metrics. The controller/processor 475 is also responsible for an HARQ operation and retransmission of a lost packet, and for signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as mapping of constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook-based precoding, and beamforming processing on the coded and modulated symbols to generate one or more parallel streams. The transmitting processor 416 then maps each parallel stream to a subcarrier, the modulated symbol is multiplexed with a reference signal (for example, a pilot frequency) in the time domain and/or frequency domain, and subsequently an inverse fast Fourier transform (IFFT) is used to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the first communication device 410 to the second communication device 450, at the second communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any parallel stream with the second communication device 450 as the destination. The symbols on each parallel stream are demodulated and recovered in the receiving processor 456, and a soft decision is generated. Subsequently, the receiving processor 456 decodes and deinterleaves the soft decision to recover the upper-layer data and a control signal transmitted by the first communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In DL (DownLink), the controller/processor 459 provides demultiplexing between transmission and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing. The controller/processor 459 is also responsible for performing error detection by using an acknowledgement (ACK) and/or negative acknowledgement (NACK) protocol to support HARQ operations.

In a transmission from the second communication device 450 to the first communication device 410, at the second communication device 450, a data source 467 is used for providing the upper-layer data packet to the controller/processor 459. The data source 467 represents all protocol layers above the L2 layer. Similar to the sending function at the first communication device 410 described in DL, the controller/processor 459 implements header compression, encryption, packet segmentation and reordering, and multiplexing between logical and transmission channels based on wireless resource allocation of the first communication device 410, and implements L2 layer functions for the user plane and the control plane. The controller/processor 459 is also responsible for HARQ operations, retransmission of lost packets, and for signaling to the first communication device 410. The transmitting processor 468 performs modulation mapping and channel coding processing, and the multi-antenna transmitting processor 457 performs digital multi-antenna spatial precoding comprising codebook-based precoding and non-codebook-based precoding, and beamforming processing. Subsequently, the transmitting processor 468 modulates the generated parallel stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the receiving function at the second communication device 450 described in the transmission from the first communication device 410 to the second communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. The controller/processor 475 provides demultiplexing between transmission and logical channels, packet reassembly, decryption, header decompression, and control signal processing to recover the upper-layer data packet from the second communication device 450. The upper-layer data packet from the controller/processor 475 can be provided to the core network. The controller/processor 475 is also responsible for performing error detection by using an ACK and/or NACK protocol to support HARQ operations.

As one embodiment, the second communication device 450 comprises: at least one processor and at least one memory, wherein the at least one memory comprises a computer program code; and the at least one memory and the computer program code are configured to be used with the at least one processor. The second communication device 450 apparatus at least: receives a reference information block and a first information block, wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, the second communication device 450 comprises: a memory storing a computer-readable instruction program, the computer-readable instruction program generates actions when executed by at least one processor, the actions comprise: receiving a reference information block and a first information block, wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, the first communication device 410 comprises: at least one processor and at least one memory, wherein the at least one memory comprises a computer program code; and the at least one memory and the computer program code are configured to be used with the at least one processor. The first communication device 410 apparatus at least: sends a reference information block and a first information block, wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, the first communication device 410 comprises: a memory storing a computer-readable instruction program, the computer-readable instruction program generates actions when executed by at least one processor, the actions comprise: sending a reference information block and a first information block, wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, the first node in the present application comprises the second communication device 450.

As one embodiment, the second node in the present application comprises the first communication device 410.

As one embodiment, the second node in the present application comprises the first communication device 450.

As one embodiment, at least one of {the antenna 452, the receiving device 454, the receiving processor 456, the multi-antenna receiving processor 458, the controller/processor 459, the memory 460, and the data source 467} is used for receiving the reference information block and the first information block in the present application; and at least one of {the antenna 420, the transmitting device 418, the transmitting processor 416, the multi-antenna transmitting processor 471, the controller/processor 475, and the memory 476} is used for sending the reference information block and the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the transmitting device 454, the transmitting processor 468, the multi-antenna transmitting processor 457, the controller/processor 459, and the memory 460} is used for sending the first signal in the first time-frequency resource group in the present application; and at least one of {the antenna 420, the receiving device 418, the receiving processor 470, the multi-antenna receiving processor 472, the controller/processor 475, and the memory 476} is used for receiving the first signal in the first time-frequency resource group in the present application.

### Embodiment 5

Embodiment 5 illustrates a flow chart of wireless transmission according to one embodiment of the present application, as shown in FIG. 5. In FIG. 5, a first node U01 and a second node N02 are respectively two communication nodes for transmission by an air interface, wherein the steps in block F1 are optional.
For **the first node U01,** in step S5101, a reference information block and a first information block are received; in step S5102, first signaling is received; and in step S5103, the first signal is sent in a first time-frequency resource group;
For **the second node N02,** in step S5201, the reference information block and the first information block are sent; in step S5202, the first signaling is sent; and in step S5203, the first signal is received in the first time-frequency resource group;
In Embodiment 5, the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, the first signaling indicates scheduling information of the first signal, the first time-frequency resource group belongs to the first time-frequency resource set, and at least one symbol in the first time-frequency resource group is configured by a higher layer parameter as a DL symbol.

Typically, the first RS resource set is used by a target recipient of the first information block for radio link quality evaluation of the first BWP.

As one embodiment, the first signal includes a baseband signal.

As one embodiment, the first signal comprises a wireless signal.

As one embodiment, the first signal comprises a radio frequency signal.

As one embodiment, the first signal is transmitted on an uplink physical channel.

As one embodiment, the first signal is transmitted on a PUSCH (Physical Uplink Shared CHannel).

As one embodiment, the first signal is transmitted on a PUCCH (Physical Uplink Control CHannel), and the first signal carries UCI (Uplink Control Information).

As one embodiment, the first signal carries at least one transport block (TB).

As one embodiment, the first signal carries and indicates one CBG (Code Block Group).

As one embodiment, the scheduling information of the first signal comprises one or more of a time domain resource, a frequency domain resource, an MCS, a DMRS (DeModulation Reference Signals) port, an HARQ (Hybrid Automatic Repeat request) process number, an RV (Redundancy Version), an NDI (New Data Indicator), a TCI (Transmission Configuration Indicator) state or an SRI (Sounding reference signal Resource Indicator).

As one embodiment, the first signaling is physical layer signaling.

As one embodiment, the first signaling is the DCI (Downlink Control Information) signaling.

As one embodiment, the first signaling is uplink DCI signaling.

As one embodiment, the first signal comprises the PUSCH, and the first signaling is a DCI signaling for scheduling the PUSCH.

As one embodiment, the first signal comprises the PUSCH, and the first signaling is used for configuring or scheduling the PUSCH.

As one embodiment, the first signaling is used for scheduling the PUSCH.

As one embodiment, the first signaling is used for configuring or scheduling the PUSCH with a configured grant.

As one embodiment, the first signaling is used for configuring or scheduling the PUSCH with the configured grant, and the first signal is a transmission of the PUSCH with one configured grant.

As one embodiment, the first signal is the PUSCH of type A, and the first signaling is used for configuring or scheduling the PUSCH of type A.

As one embodiment, the first signal is the PUSCH of type B, and the first signaling is used for configuring or scheduling the PUSCH of type B.

As one embodiment, the first signal is the PUSCH based on TB processing over multiple slots, and the first signaling is used for configuring or scheduling the PUSCH based on TB processing over multiple slots.

As one embodiment, the first signal comprises a PUSCH repetition type B transmission, and the first signaling is the DCI signaling for scheduling the PUSCH repetition type B transmission.

Typically, the PUSCH of type A occupies the same symbol position in each of a plurality of slots.

Typically, the PUSCH of type B is assigned with a group of consecutive symbols.

Typically, the PUSCH of type B is assigned one or more nominal repetitions.

Typically, in the PUSCH based on TB processing over multiple slots, the determination of a TBS (TB size, transport block size) is based on a size of the time-frequency resources in the plurality of slots.

As one embodiment, for the specific definition of the PUSCH type A, the PUSCH type B, and the TB processing over multiple slots, refer to Section 6 of 3GPP TS38.214.

As one embodiment, the first time-frequency resource set also comprises time-frequency resources outside the first time-frequency resource group.

As one embodiment, the first time-frequency resource set only comprises the first time-frequency resource group.

As one embodiment, at least one symbol in the first time-frequency resource group is configured as the DL symbol by an RRC parameter.

As one embodiment, at least one symbol in the first time-frequency resource group is configured as the DL symbol by an MAC CE.

As one embodiment, each symbol in the first time-frequency resource group is configured as the DL (DownLink) symbol by a higher layer parameter.

As one embodiment, parts of the symbols in the first time-frequency resource group are configured by the higher layer parameter as the DL symbols.

As one embodiment, symbols in the first time-frequency resource group are configured by the higher layer parameter as the DL symbols or flexible symbols.

As one embodiment, at least one symbol in the first time-frequency resource group is configured as the DL symbol by the higher layer parameter tdd-UL-DL-ConfigurationCommon or tdd-UL-DL-ConfigurationDedicated.

As one embodiment, each symbol in the first time-frequency resource group is configured as the DL symbol by the higher layer parameter tdd-UL-DL-ConfigurationCommon or tdd-UL-DL-ConfigurationDedicated.

As one embodiment, parts of the symbols in the first time-frequency resource group are configured as the DL symbols by the higher layer parameter tdd-UL-DL-ConfigurationCommon or tdd-UL-DL-ConfigurationDedicated.

As one embodiment, symbols in the first time-frequency resource group are configured as the DL symbols or the flexible symbols by the higher layer parameter tdd-UL-DL-ConfigurationCommon or tdd-UL-DL-ConfigurationDedicated.

As one embodiment, at least one symbol in the first time-frequency resource group is configured as the DL symbol by the higher layer parameter tdd-UL-DL-ConfigurationCommon.

As one embodiment, each symbol in the first time-frequency resource group is configured as the DL symbol by the higher layer parameter tdd-UL-DL-ConfigurationCommon.

As one embodiment, parts of the symbols in the first time-frequency resource group are configured as the DL symbols by the higher layer parameter tdd-UL-DL-ConfigurationCommon.

As one embodiment, symbols in the first time-frequency resource group are configured as the DL symbols or the flexible symbols by the higher layer parameter tdd-UL-DL-ConfigurationCommon.

### Embodiment 6

Embodiments 6A-6C respectively illustrate a schematic diagram of a first time-frequency resource set according to one embodiment of the present application, as shown in FIGS. 6A-6C.

In Embodiment 6A, at least one symbol in the first time-frequency resource set is configured by a higher layer parameter as a DL symbol.

As one embodiment, each symbol in the first time-frequency resource set is configured by the higher layer parameter as the DL symbol.

As one embodiment, parts of the symbols in the first time-frequency resource set are configured by the higher layer parameter as the DL symbols.

As one embodiment, the symbols in the first time-frequency resource set are configured by the higher layer parameter as the DL symbols or the flexible symbols.

As one embodiment, at least one symbol in the first time-frequency resource set is configured as the DL symbol by the higher layer parameter tdd-UL-DL-ConfigurationCommon or tdd-UL-DL-ConfigurationDedicated

As one embodiment, each symbol in the first time-frequency resource set is configured as the DL symbol by the higher layer parameter tdd-UL-DL-ConfigurationCommon or tdd-UL-DL-ConfigurationDedicated.

As one embodiment, parts of the symbols in the first time-frequency resource set are configured as the DL symbols by the higher layer parameter tdd-UL-DL-ConfigurationCommon or tdd-UL-DL-ConfigurationDedicated.

As one embodiment, the symbols in the first time-frequency resource set are configured as the DL symbols or the flexible symbols by the higher layer parameter tdd-UL-DL-ConfigurationCommon or tdd-UL-DL-ConfigurationDedicated.

As one embodiment, at least one symbol in the first time-frequency resource set is configured as the DL symbol by the higher layer parameter tdd-UL-DL-ConfigurationCommon.

As one embodiment, each symbol in the first time-frequency resource set is configured as the DL symbol by the higher layer parameter tdd-UL-DL-ConfigurationCommon.

As one embodiment, parts of the symbols in the first time-frequency resource set are configured as the DL symbols by the higher layer parameter tdd-UL-DL-ConfigurationCommon.

As one embodiment, the symbols in the first time-frequency resource set are configured as the DL symbols or the flexible symbols by the higher layer parameter tdd-UL-DL-ConfigurationCommon.

In Embodiment 6B, the symbols in the first time-frequency resource set are simultaneously used for an uplink transmission and a downlink transmission.

As one embodiment, the symbols in the first time-frequency resource set are simultaneously used for the uplink transmission and the downlink transmission in a first BWP.

As one embodiment, the symbols in the first time-frequency resource set are simultaneously used for the uplink transmission and the downlink transmission in a serving cell where the first BWP is located.

As one embodiment, the meaning of the sentence "the symbols in the first time-frequency resource set are simultaneously used for an uplink transmission and a downlink transmission" comprises: a sender of a first information block simultaneously receives and sends wireless signals in the symbols in the first time-frequency resource set.

As one embodiment, the meaning of the sentence "the symbols in the first time-frequency resource set are simultaneously used for an uplink transmission and a downlink transmission " comprises: in the first BWP, the sender of the first information block simultaneously receives and sends wireless signals in the symbols in the first time-frequency resource set.

As one embodiment, the meaning of the sentence "the symbols in the first time-frequency resource set are simultaneously used for an uplink transmission and a downlink transmission" comprises: in the serving cell where the first BWP is located, the sender of the first information block simultaneously receives and sends wireless signals in the symbols in the first time-frequency resource set.

As one embodiment, the meaning of the sentence "the symbols in the first time-frequency resource set are simultaneously used for an uplink transmission and a downlink transmission" comprises: in a serving cell group where the first BWP is located, the sender of the first information block simultaneously receives and sends wireless signals in the symbols in the first time-frequency resource set.

As one embodiment, the meaning of the sentence "the symbols in the first time-frequency resource set are simultaneously used for an uplink transmission and a downlink transmission" comprises: the sender of the first information block supports simultaneously receiving and sending wireless signals in the symbols in the first time-frequency resource set.

As one embodiment, the meaning of the sentence "the symbols in the first time-frequency resource set are simultaneously used for an uplink transmission and a downlink transmission " comprises: in the first BWP, the sender of the first information block supports simultaneously receiving and sending wireless signals in the symbols in the first time-frequency resource set.

As one embodiment, the meaning of the sentence "the symbols in the first time-frequency resource set are simultaneously used for an uplink transmission and a downlink transmission" comprises: in the serving cell where the first BWP is located, the sender of the first information block supports simultaneously receiving and sending wireless signals in the symbols in the first time-frequency resource set.

As one embodiment, the meaning of the sentence "the symbols in the first time-frequency resource set are simultaneously used for an uplink transmission and a downlink transmission" comprises: in a serving cell group where the first BWP is located, the sender of the first information block supports simultaneously receiving and sending wireless signals in the symbols in the first time-frequency resource set.

As one embodiment, the phrase "the symbols in the first time-frequency resource set" means: any symbol in the first time-frequency resource set.

As one embodiment, the phrase "the symbols in the first time-frequency resource set" means: one symbol in the first time-frequency resource set.

As one embodiment, the phrase "the symbols in the first time-frequency resource set" means: at least one symbol in the first time-frequency resource set.

As one embodiment, the first time-frequency resource set does not comprise a symbol used for transmission of a first type of downlink signals, and the first type of downlink signals comprises one or more of an SS (Synchronisation Signal)/PBCH (physical broadcast channel) block, a CORESET (COntrol REsource SET) with an index of 0 or an SIB (System Information Block).

As one embodiment, the first time-frequency resource set does not comprise a symbol used for transmission of a first type of downlink signals, and the first type of downlink signals comprises one or more of the SS/PBCH block of the serving cell where the first signal is located, the CORESET with an index of 0 or the SIB.

In Embodiment 6C, the first information block configures the symbols in the first time-frequency resource set as the first type.

As one embodiment, the first type is different from UL (UpLink) and DL.

As one embodiment, the first type is different from UL, DL and Flexible.

As one embodiment, the first type comprises Flexible.

As one embodiment, in the first BWP, the first information block configures the symbols in the first time-frequency resource set as the first type.

As one embodiment, in the serving cell where the first BWP is located, the first information block configures the symbols in the first time-frequency resource set as the first type.

As one embodiment, in the serving cell group where the first signal is located, the first information block configures the symbols in the first time-frequency resource set as the first type.

As one embodiment, the meaning of the sentence that the symbols in the first time-frequency resource set are configured as the first type comprises: configuring each symbol in the first time-frequency resource set as the first type.

As one embodiment, the meaning of the sentence that the symbols in the first time-frequency resource set are configured as the first type comprises: configuring at least one symbol in the first time-frequency resource set as the first type.

As one embodiment, the meaning of the sentence that the symbols in the first time-frequency resource set are configured as the first type comprises: configuring the type of the symbols in the first time-frequency resource set as the first type.

As one embodiment, the meaning of the sentence of configuring the symbols in the first time-frequency resource set as the first type comprises: configuring the type of each symbol in the first time-frequency resource set as the first type.

As one embodiment, the meaning of the sentence that the symbols in the first time-frequency resource set are configured as the first type comprises: configuring the type of at least one symbol in the first time-frequency resource set as the first type.

As one embodiment, the meaning of the sentence that the first information block is used for determining the first time-frequency resource set comprises: the first information block configures the symbols in the first time-frequency resource set as the first type.

As one embodiment, the meaning of the sentence that the first information block is used for determining the first time-frequency resource set comprises: the first information block configures each symbol in the first time-frequency resource set as the first type.

As one embodiment, the meaning of the sentence that the first information block is used for determining the first time-frequency resource set comprises: the first information block configures at least one symbol in the first time-frequency resource set as the first type.

As one embodiment, the meaning of the sentence that the first information block is used for determining the first time-frequency resource set comprises: the first information block indicates the type of each symbol in the first time-frequency resource set.

As one embodiment, the meaning of the sentence that the first information block is used for determining the first time-frequency resource set comprises: the first information block indicates that the type of each symbol in the first time-frequency resource set is the first type.

As one embodiment, the meaning of the sentence that the first information block is used for determining the first time-frequency resource set comprises: the first information block indicates that the type of at least one symbol in the first time-frequency resource set is the first type.

As one embodiment, when one symbol is configured as the first type, the sender of the first information block simultaneously receives and sends wireless signals on the one symbol.

As one embodiment, when one symbol is configured as the first type, the sender of the first information block supports simultaneously receiving and sending wireless signals on the one symbol.

As one embodiment, when one symbol is configured as a type other than the first type, the sender of the first information block only receives wireless signals or only sends wireless signals on the one symbol.

As one embodiment, when one symbol is configured as the type other than the first type, the sender of the first information block does not support simultaneously receiving and sending wireless signals on the one symbol.

As one embodiment, the sender of the first information block only receives wireless signals or only sends wireless signals in a symbol outside the first time-frequency resource set.

As one embodiment, any symbol outside the first time-frequency resource set is used only for the uplink transmission or used only for the downlink transmission.

As one embodiment, the sender of the first information block only receives wireless signals or only sends wireless signals in any symbol outside the first time-frequency resource set.

As one embodiment, in the first BWP, the sender of the first information block only receives wireless signals or only sends wireless signals in any symbol outside the first time-frequency resource set.

As one embodiment, in the serving cell where the first BWP is located, the sender of the first information block only receives wireless signals or only sends wireless signals in the symbol outside the first time-frequency resource set.

As one embodiment, in the serving cell group where the first BWP is located, the sender of the first information block receives only wireless signals or sends only wireless signals in the symbol outside the first time-frequency resource set.

### Embodiment 7

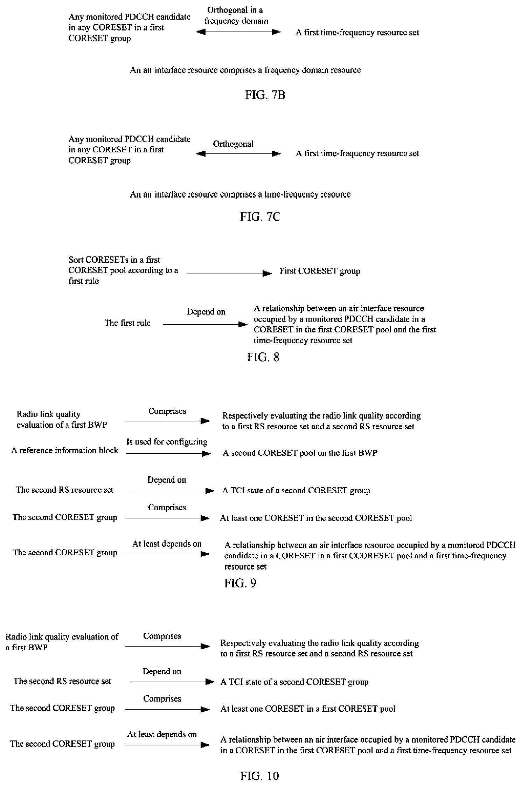

Embodiments 7A-7C respectively illustrate a schematic diagram of a first CORESET group according to one embodiment of the present application, as shown in FIGS. 7A-7C.

In Embodiment 7A, an air interface resource comprises a time domain resource, and a first time-frequency resource set comprises at least one symbol in a time domain; and any monitored PDCCH candidate in any CORESET in the first CORESET group and the first time-frequency resource set are orthogonal in the time domain.

As one embodiment, the phrase "orthogonal in a time domain" means: do not overlap in the time domain.

As one embodiment, the phrase "orthogonal in a time domain" means: the same symbols are not included in the time domain.

As one embodiment, the phrase "orthogonal in a time domain" means: the same moments are not included in the time domain.

In Embodiment 7B, the air interface resource comprises a frequency domain resource; and any monitored PDCCH candidate in any CORESET in the first CORESET group and the first time-frequency resource set are orthogonal in a frequency domain.

As one embodiment, the phrase "orthogonal in a frequency domain" means: do not overlap in the frequency domain.

As one embodiment, the phrase "orthogonal in a frequency domain" means: the same subcarriers are not included in the frequency domain.

As one embodiment, the phrase "orthogonal in a frequency domain" means: the same RBs are not included in the frequency domain.

In Embodiment 7C, the air interface resource comprises a time-frequency resource; and any monitored PDCCH candidate in any CORESET in the first CORESET group is orthogonal to the first time-frequency resource set.

As one embodiment, the phrase "orthogonal to the first time-frequency resource set" means: do not overlap the first time-frequency resource set.

As one embodiment, the phrase "orthogonal to the first time-frequency resource set" means: being orthogonal to the first time-frequency resource set does not comprise the same REs.

### Embodiment 8

Embodiment 8 illustrates a schematic diagram of a first CORESET group according to another embodiment of the present application, as shown in FIG. 8.

In Embodiment 8, the first CORESET group is determined by sorting CORESETs in a first CORESET pool according to a first rule; and the first rule depends on the relationship between the air interface resource occupied by the monitored PDCCH candidate in the CORESET in the first CORESET pool and the first time-frequency resource set.

As one embodiment, the meaning of the sentence "the first CORESET group is determined by sorting CORESETs in a first CORESET pool according to a first rule" comprises: sorting the CORESETs in the first CORESET pool according to the first rule, the first CORESET group comprises the first K CORESETs in the first CORESET pool, and K is a positive integer.

As one embodiment, the meaning of the sentence "the first CORESET group is determined by sorting CORESETs in a first CORESET pool according to a first rule" comprises: a reference CORESET set comprises all CORESETs, where the monitored PDCCH candidates are located, in the first CORESET pool; and the reference CORESET set is sorted according to the first rule, the first CORESET group comprises the first K CORESETs in the reference CORESET set, and K is a positive integer.

As one embodiment, the meaning of the sentence "the first rule depends on a relationship between an air interface resource occupied by a monitored PDCCH candidate in the CORESET in the first CORESET pool and a first time-frequency resource set" comprises: the air interface resource comprises a time domain resource, and in the first CORESET pool, the CORESET that satisfies "the monitored PDCCH candidate and the first time-frequency resource set are orthogonal in a time domain" is ranked before the CORESET that satisfies "the monitored PDCCH candidate overlaps the first time-frequency resource set in a time domain".

As one embodiment, the meaning of the sentence "the first rule depends on a relationship between an air interface resource occupied by a monitored PDCCH candidate in the CORESET in the first CORESET pool and the first time-frequency resource set" comprises: the air interface resource comprises a frequency domain resource, and in the first CORESET pool, the CORESET that satisfies "the monitored PDCCH candidate and the first time-frequency resource set are orthogonal in a frequency domain" is ranked before the CORESET that satisfies "the monitored PDCCH candidate overlaps the first time-frequency resource set in a frequency domain".

As one embodiment, the meaning of the sentence "the first rule depends on a relationship between an air interface resource occupied by a monitored PDCCH candidates in the CORESET in the first CORESET pool and the first time-frequency resource set" comprises: the air interface resource comprises a time-frequency resource, and in the first CORESET pool, the CORESET that satisfies "the monitored PDCCH candidate is orthogonal to the first time-frequency resource set" is ranked before the CORESET that satisfies "the monitored PDCCH candidate overlaps the first time-frequency resource set".

As one embodiment, the first rule is also related to a PDCCH monitoring period of a search space associated with the CORESET.

As one embodiment, the first rule is also related to an index of the CORESET.

As one embodiment, the first rule also comprises: ranking in an ascending order of the PDCCH monitoring periods of the search space associated with the CORESETs; and under the same PDCCH monitoring period, ranking in a descending order of CORESET indexes.

As one embodiment, the air interface resource comprises the time domain resource; the first rule comprises: first, in the first CORESET pool, the CORESET that satisfies "the monitored PDCCH candidate and the first time-frequency resource set are orthogonal in a time domain" is ranked before the CORESET that satisfies "the monitored PDCCH candidate overlaps the first time-frequency resource set in a time domain"; and second, the CORESETs are ranked in the ascending order of the PDCCH monitoring periods of the search space associated with the CORESETs, and under the same PDCCH monitoring period, are ranked according to the descending order of the CORESET indexes.

As one embodiment, the air interface resource comprises the frequency domain resource; the first rule comprises: first, in the first CORESET pool, the CORESET that satisfies "the monitored PDCCH candidate and the first time-frequency resource set are orthogonal in a frequency domain" is ranked before the CORESET that satisfies "the monitored PDCCH candidate overlaps the first time-frequency resource set in a frequency domain"; second, the CORESETs are ranked in the ascending order of the PDCCH monitoring periods of the search space associated with the CORESETs, and under the same PDCCH monitoring period, are ranked according to the descending order of the CORESET indexes.

As one embodiment, the air interface resource comprises the time-frequency resource; the first rule comprises: first, in the first CORESET pool, the CORESET that satisfies "the monitored PDCCH candidate and the first time-frequency resource set are orthogonal" is ranked before the CORESET that satisfies "the monitored PDCCH candidate overlaps the first time-frequency resource set"; and second, the CORESETs are ranked in the ascending order of the PDCCH monitoring periods of the search space associated with the CORESETs, and under the same PDCCH monitoring period, are ranked according to the descending order of the CORESET indexes.

As one embodiment, the air interface resource comprises the time domain resource; the first rule comprises: first, ranking in the ascending order of the PDCCH monitoring periods of the search space associated with the CORESETs; and under the same PDCCH monitoring period, in the first CORESET pool, the CORESET that satisfies "the monitored PDCCH candidate and the first time-frequency resource set are orthogonal in a time domain" is ranked before the CORESET that satisfies "the monitored PDCCH candidate overlaps the first time-frequency resource set in a time domain."

As one embodiment, the air interface resource comprises the frequency domain resource; the first rule comprises: first, ranking in the ascending order of the PDCCH monitoring periods of the search space associated with the CORESETs; and under the same PDCCH monitoring period, in the first CORESET pool, the CORESET that satisfies "the monitored PDCCH candidate and the first time-frequency resource set are orthogonal in a frequency domain" is ranked before the CORESET that satisfies "the monitored PDCCH candidate overlap the first time-frequency resource set in the frequency domain."

As one embodiment, the air interface resource comprises the time-frequency resource; the first rule comprises: first, ranking in the ascending order of the PDCCH monitoring periods of the search space associated with the CORESETs; and under the same PDCCH monitoring period, in the first CORESET pool, the CORESET that satisfies "the monitored PDCCH candidate and the first time-frequency resource set are orthogonal" is ranked before the CORESET that satisfies "the monitored PDCCH candidate overlaps the first time-frequency resource set".

As one embodiment, the air interface resource comprises the time domain resource; the first rule comprises: first, ranking in the ascending order of the PDCCH monitoring periods of the search space corresponding to the CORESETs; under the same PDCCH monitoring period, ranking in the descending order of the CORESET indexes; and under the same CORESET index, in the first CORESET pool, the CORESET that satisfies "the monitored PDCCH candidate and the first time-frequency resource set are orthogonal in a time domain" is ranked before the CORESET that satisfies "the monitored PDCCH candidate overlaps the first time-frequency resource set in a time domain".

As one embodiment, the air interface resource comprises the frequency domain resource; the first rule comprises: first, ranking in the ascending order of the PDCCH monitoring periods of the search space corresponding to the CORESETs; under the same PDCCH monitoring period, ranking in the descending order of the CORESET indexes; and under the same CORESET index, in the first CORESET pool, the CORESET that satisfies "the monitored PDCCH candidate and the first time-frequency resource set are orthogonal in a frequency domain" is ranked before the CORESET that satisfies "the monitored PDCCH candidate overlaps the first time-frequency resource set in a frequency domain".

As one embodiment, the air interface resource comprises the time-frequency resource; the first rule comprises: first, ranking in the ascending order of the PDCCH monitoring periods of the search space corresponding to the CORESETs; under the same PDCCH monitoring period, ranking in the descending order of the CORESET indexes; and under the same CORESET index, in the first CORESET pool, the CORESET that satisfies "the monitored PDCCH candidate and the first time-frequency resource set are orthogonal" is ranked before the CORESET that satisfies "the monitored PDCCH candidate overlaps the first time-frequency resource set".

Typically, the sentence "the monitored PDCCH candidate and the first time-frequency resource set are orthogonal in a time domain" means: the monitored PDCCH candidate does not belong to the first time-frequency resource set in the time domain.

As one embodiment, the sentence "the monitored PDCCH candidate overlaps the first time-frequency resource set in the time domain" means: the monitored PDCCH candidate belongs to the first time-frequency resource set in the time domain.

As one embodiment, the sentence "the monitored PDCCH candidate overlaps the first time-frequency resource set in a time domain" means: at least one symbol in the monitored PDCCH candidate belongs to the first time-frequency resource set in the time domain.

Typically, the sentence "the monitored PDCCH candidate and the first time-frequency resource set are orthogonal in a frequency domain" means: the monitored PDCCH candidate does not belong to the first time-frequency resource set in the frequency domain.

As one embodiment, the sentence "the monitored PDCCH candidate overlaps the first time-frequency resource set in a frequency domain" means: the monitored PDCCH candidate belongs to the first time-frequency resource set in the frequency domain.

As one embodiment, the sentence "the monitored PDCCH candidate overlaps the first time-frequency resource set in a frequency domain" means: at least one subcarrier in the monitored PDCCH candidate belongs to the first time-frequency resource set in the frequency domain.

Typically, the sentence "the monitored PDCCH candidate and the first time-frequency resource set are orthogonal" means: the monitored PDCCH candidate does not belong to the first time-frequency resource set.

As one embodiment, the sentence "the monitored PDCCH candidate overlaps the first time-frequency resource set" means: the monitored PDCCH candidate belongs to the first time-frequency resource set.

As one embodiment, the sentence "the monitored PDCCH candidate overlaps the first time-frequency resource set" means: at least one RE in the monitored PDCCH candidate belongs to the first time-frequency resource set.

As one embodiment, the air interface resource comprises the time domain resource; The first rule also comprises: for all CORESETs in the first CORESET pool that satisfy "the monitored PDCCH candidate and the first time-frequency resource set are orthogonal in a time domain", they are ranked in the descending order of the CORESET index; and for all CORESETs that satisfy "the monitored PDCCH candidate overlaps the first time-frequency resource set in a time domain", they are ranked in the descending order of the CORESET indexes.

As one embodiment, the air interface resource comprises the frequency domain resource; The first rule also comprises: for all CORESETs in the first CORESET pool that satisfy "the monitored PDCCH candidate and the first time-frequency resource set are orthogonal in a frequency domain", they are ranked in the descending order of the CORESET indexes; and for all CORESETs that satisfy "the monitored PDCCH candidate overlaps the first time-frequency resource set in a frequency domain", they are ranked in the descending order of the CORESET indexes.

As one embodiment, the air interface resource comprises the time-frequency resource; The first rule also comprises: for all CORESETs in the first CORESET pool that satisfy "the monitored PDCCH candidate and the first time-frequency resource set are orthogonal", they are ranked in the descending order of the CORESET indexes; and for all CORESETs that satisfy "the monitored PDCCH candidate overlaps the first time-frequency resource set", they are ranked in the descending order of the CORESET indexes.

### Embodiment 9

Embodiment 9 illustrates a schematic diagram of a second RS resource set according to one embodiment of the present application, as shown in FIG. 9.

In Embodiment 9, radio link quality evaluation of a first BWP comprises: respectively evaluating the radio link quality according to the first RS resource set and a second RS resource set; the reference information block is used for configuring a second CORESET pool on the first BWP, the second RS resource set depends on a TCI state of a second CORESET group, and the second CORESET group comprises at least one CORESET in the second CORESET pool; and the second CORESET group at least depends on a relationship between an air interface resource occupied by a monitored PDCCH candidate in a CORESET in the second CORESET pool and the first time-frequency resource set.

Typically, a recipient of a first information block respectively evaluates the radio link quality according to the first RS resource set and the second RS resource set.

As one embodiment, an index of a first CORESET pool is 0, and an index of the second CORESET pool is 1.

As one embodiment, an index of a first CORESET pool is 1, and an index of the second CORESET pool is 0.

As one embodiment, the first CORESET pool comprises at least one CORESET corresponding to CORESETPoolIndex of 0, and the second CORESET pool comprises at least one CORESET corresponding to CORESETPoolIndex of 1.

As one embodiment, the first CORESET pool comprises at least one CORESET corresponding to CORESETPoolIndex of 1, and the second CORESET pool comprises at least one CORESET corresponding to CORESETPoolIndex of 0.

As one embodiment, the reference information block indicates an index of a CORESET in the second CORESET pool on the first BWP.

As one embodiment, the reference information block indicates configuration information of the CORESET in the second CORESET pool on the first BWP.

As one embodiment, "a CORESET in the second CORESET pool" means: any CORESET in the second CORESET pool.

As one embodiment, "a CORESET in the second CORESET pool" means: each CORESET in the second CORESET pool.

As one embodiment, "a CORESET in the second CORESET pool" means: at least one CORESET in the second CORESET pool.

As one embodiment, "a CORESET in the second CORESET pool" means: parts of the CORESETs in the second CORESET pool.

As one embodiment, "a CORESET in the second CORESET pool" means: all CORESETs in the second CORESET pool.

As one embodiment, the second CORESET pool comprises one or more CORESETs.

As one embodiment, the second CORESET pool comprises a plurality of CORESETs.

As one embodiment, the first CORESET pool and the second CORESET pool comprise a total of at most 5 CORESETs.

As one embodiment, the meaning of the sentence "the second RS resource set depends on a TCI state of a second CORESET group" comprises: any RS resource in the second RS resource set depends on the TCI state of one CORESET in the second CORESET group.

As one embodiment, the meaning of the sentence "the second RS resource set depends on a TCI state of a second CORESET group" comprises: at least one RS resource in the second RS resource set depends on the TCI state of one CORESET in the second CORESET group.

As one embodiment, the meaning of the sentence "the second RS resource set depends on a TCI state of a second CORESET group" comprises: at least one RS resource in the second RS resource set depends on the TCI state of one CORESET in the second CORESET group.

As one embodiment, the meaning of the sentence "the second RS resource set depends on a TCI state of a second CORESET group" comprises: one RS resource set of the second RS resource set depends on the TCI state of at least one CORESET in the second CORESET group.

As one embodiment, the meaning of the sentence "the second RS resource set depends on a TCI state of a second CORESET group" comprises: one RS resource set of the second RS resource set depends on the TCI state of any CORESET in the second CORESET group.

As one embodiment, the meaning of the sentence "the second CORESET group at least depends on a relationship between an air interface resource occupied by a monitored PDCCH candidate in a CORESET in the second CORESET pool and the first time-frequency resource set" comprises: the second CORESET group only depends on the relationship between the air interface resource occupied by the monitored PDCCH candidate in the CORESET in the second CORESET pool and the first time-frequency resource set.

As one embodiment, the meaning of the sentence "the second CORESET group at least depends on a relationship between an air interface resource occupied by a monitored PDCCH candidate in a CORESET in the second CORESET pool and the first time-frequency resource set" comprises: the second CORESET group at least depends on the relationship between the air interface resource occupied by the monitored PDCCH candidate in the CORESET in the second CORESET pool and the first time-frequency resource set, and the first CORESET group also comprises CORESETs outside the second CORESET pool.

As one embodiment, the meaning of the sentence "the second CORESET group at least depends on a relationship between an air interface resource occupied by a monitored PDCCH candidate in a CORESET in the second CORESET pool and the first time-frequency resource set" comprises: the air interface resource comprises the time domain resource, and the first time-frequency resource set comprises at least one symbol in the time domain; and any monitored PDCCH candidate in any CORESET in the second CORESET group and the first time-frequency resource set are orthogonal in the time domain.

As one embodiment, the meaning of the sentence "the second CORESET group at least depends on a relationship between an air interface resource occupied by a monitored PDCCH candidate in a CORESET in the second CORESET pool and the first time-frequency resource set" comprises: the air interface resource comprises the time domain resource, and the first time-frequency resource set comprises at least one symbol in the time domain; and any monitored PDCCH candidate in at least one CORESET in the second CORESET group and the first time-frequency resource set are orthogonal in the time domain.

As one embodiment, the meaning of the sentence "the second CORESET group at least depends on a relationship between an air interface resource occupied by a monitored PDCCH candidate in a CORESET in the second CORESET pool and the first time-frequency resource set" comprises: the air interface resource comprises the frequency domain resource; and any monitored PDCCH candidate in any CORESET in the second CORESET group and the first time-frequency resource set are orthogonal in a frequency domain.

As one embodiment, the meaning of the sentence "the second CORESET group at least depends on a relationship between an air interface resource occupied by a monitored PDCCH candidate in a CORESET in the second CORESET pool and the first time-frequency resource set" comprises: the air interface resource comprises the frequency domain resource; and any monitored PDCCH candidate in the at least one CORESET in the second CORESET group and the first time-frequency resource set are orthogonal in the frequency domain.

As one embodiment, the meaning of the sentence "the second CORESET group at least depends on a relationship between an air interface resource occupied by a monitored PDCCH candidate in a CORESET in the second CORESET pool and the first time-frequency resource set" comprises: the air interface resource comprises the time-frequency resource; and any monitored PDCCH candidate in any CORESET in the second CORESET group is orthogonal to the first time-frequency resource set.

As one embodiment, the meaning of the sentence "the second CORESET group at least depends on a relationship between an air interface resource occupied by a monitored PDCCH candidate in a CORESET in the second CORESET pool and the first time-frequency resource set" comprises: the air interface resource comprises the time-frequency resource; and any monitored PDCCH candidate in the at least one CORESET in the second CORESET group is orthogonal to the first time-frequency resource set.

### Embodiment 10

Embodiment 10 illustrates a schematic diagram of a second RS resource set according to another embodiment of the present application, as shown in FIG. 10.

In Embodiment 10, radio link quality evaluation of a first BWP comprises: respectively evaluating the radio link quality according to the first RS resource set and a second RS resource set; the second RS resource set depends on a TCI state of a second CORESET group, and the second CORESET group comprises at least one CORESET in the first CORESET pool; and the second CORESET group at least depends on the relationship between the air interface resource occupied by the monitored PDCCH candidate in the CORESET in the first CORESET pool and the first time-frequency resource set.

As one embodiment, the meaning of the sentence "the second CORESET group at least depends on a relationship between an air interface resource occupied by a monitored PDCCH candidate in a CORESET in the first CORESET pool and the first time-frequency resource set" comprises: the second CORESET group only depends on the relationship between the air interface resource occupied by the monitored PDCCH candidate in the CORESET in the first CORESET pool and the first time-frequency resource set.

As one embodiment, the meaning of the sentence "the second CORESET group at least depends on a relationship between an air interface resource occupied by a monitored PDCCH candidate in a CORESET in the first CORESET pool and the first time-frequency resource set" comprises: the second CORESET group at least depends on the relationship between the air interface resource occupied by the monitored PDCCH candidate in the CORESET in the first CORESET pool and the first time-frequency resource set, and the second CORESET group also comprises CORESETs outside the first CORESET pool.

As one embodiment, the meaning of the sentence "the second CORESET group at least depends on a relationship between an air interface resource occupied by a monitored PDCCH candidate in a CORESET in the first CORESET pool and the first time-frequency resource set" comprises: the air interface resource comprises the time domain resource, and the first time-frequency resource set comprises at least one symbol in a time domain; and any monitored PDCCH candidate in any CORESET in the second CORESET group overlaps the first time-frequency resource set in the time domain.

As one embodiment, the meaning of the sentence "the second CORESET group at least depends on a relationship between an air interface resource occupied by a monitored PDCCH candidate in a CORESET in the first CORESET pool and the first time-frequency resource set" comprises: the air interface resource comprises the time domain resource, and the first time-frequency resource set comprises at least one symbol in a time domain; and any monitored PDCCH candidate in at least one CORESET in the second CORESET group overlaps the first time-frequency resource set in the time domain.

As one embodiment, the meaning of the sentence "the second CORESET group at least depends on a relationship between an air interface resource occupied by a monitored PDCCH candidate in a CORESET in the first CORESET pool and the first time-frequency resource set" comprises: the air interface resource comprises the frequency domain resource; and any monitored PDCCH candidate in any CORESET in the second CORESET group overlaps the first time-frequency resource set in a frequency domain.

As one embodiment, the meaning of the sentence "the second CORESET group at least depends on a relationship between an air interface resource occupied by a monitored PDCCH candidate in a CORESET in the first CORESET pool and the first time-frequency resource set" comprises: the air interface resource comprises the frequency domain resource; and any monitored PDCCH candidate in the at least one CORESET in the second CORESET group overlaps the first time-frequency resource set in the frequency domain.

As one embodiment, the meaning of the sentence "the second CORESET group at least depends on a relationship between an air interface resource occupied by a monitored PDCCH candidate in a CORESET in the first CORESET pool and the first time-frequency resource set" comprises: the air interface resource comprises the time-frequency resource; and any monitored PDCCH candidate in any CORESET in the second CORESET group overlaps the first time-frequency resource set.

As one embodiment, the meaning of the sentence "the second CORESET group at least depends on a relationship between an air interface resource occupied by a monitored PDCCH candidate in a CORESET in the first CORESET pool and the first time-frequency resource set" comprises: the air interface resource comprises the time-frequency resource; and any monitored PDCCH candidate in the at least one CORESET in the second CORESET group overlaps the first time-frequency resource set.

### Embodiment 11

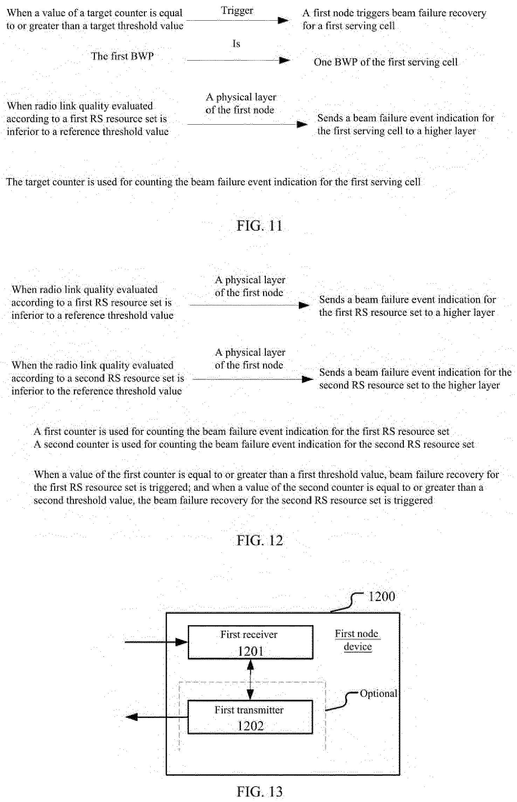

Embodiment 11 illustrates a schematic diagram of triggering of beam failure recovery according to one embodiment of the present application, as shown in FIG. 11.

In Embodiment 11, when a value of a target counter is equal to or greater than a target threshold value, a first node in the present application triggers the beam failure recovery for a first serving cell, wherein the first BWP is one BWP of the first serving cell; when radio link quality evaluated according to the first RS resource set is inferior to a reference threshold value, a physical layer of a first node sends to the higher layer a beam failure event indication for the first serving cell; and the target counter is used for counting the beam failure event indication for the first serving cell.

Typically, the beam failure event indication for the first serving cell is sent from the physical layer to the higher layer within the first node.

Typically, the beam failure recovery for the first serving cell is triggered by the first node in the present application.

Typically, the first serving cell is a serving cell where the first BWP is located.

As one embodiment, the radio link quality is one of RSRP, L1-RSRP, SINR or L1-SINR; and the meaning of the phrase "radio link quality being inferior to a reference threshold value" comprises: the radio link quality is less than the reference threshold value.

As one sub-embodiment of the above-mentioned embodiment, the unit of the reference threshold value is dBm or dB.

As one embodiment, the radio link quality is BLER; and the meaning of the phrase "radio link quality being inferior to a reference threshold value" comprises: the radio link quality is greater than the reference threshold value.

As one sub-embodiment of the above-mentioned embodiment, the reference threshold value is a BLER threshold value.

As one embodiment, the radio link quality is a hypothetical BLER; the meaning of the phrase "radio link quality being inferior to a reference threshold value" comprises: the radio link quality is greater than the reference threshold value.

As one embodiment, the reference threshold value is a real number.

As one embodiment, the reference threshold value is a non-negative real number.

As one embodiment, the reference threshold value is a non-negative real number not greater than 1.

As one embodiment, the reference threshold value is Qout_L.

As one embodiment, the reference threshold value is one of Qout_L, Qout_LR_SSB, or Qout LR CSI-RS.

As one embodiment, for the definitions of Qout_LR, Qout_LR_SSB, and Qout_LR_CSI-RS, refer to 3GPP TS38.133.

As one embodiment, the reference threshold value is configured by an RRC parameter rlmInSyncOutOfSyncThreshold.

As one embodiment, the reference threshold value is a default value of rlmInSyncOutOfSyncThreshold.

As one embodiment, for the specific definition of rlmInSyncOutOfSyncThreshold, refer to Section 6 of 3GPP TS38.213.

As one embodiment, for the definition of rlmInSyncOutOfSyncThreshold, refer to 3GPP TS38.133.

Typically, the sentence "when a value of a target counter is equal to or greater than a target threshold value" means: when and only when the value of the target counter is equal to or greater than the target threshold value.

Typically, the sentence "when a value of a target counter is equal to or greater than a target threshold value" means: in response to the value of the target counter being equal to or greater than the target threshold value.

Typically, the first node maintains the target counter at an MAC layer.

Typically, an MAC entity of the first node maintains the target counter.

Typically, when the MAC entity of the first node receives a beam failure event indication for the first serving cell from the physical layer, the target timer is started or restarted, and the value of the target counter is increased by 1.

Typically, the target counter is BFI_COUNTER.

Typically, when the target timer expires, the target counter is set as 0.

Typically, the target timer is beamFailureDetectionTimer.

As one embodiment, the target counter is BFI_COUNTER.

As one embodiment, an initial value of the target counter is 0.

As one embodiment, the target threshold value is a positive integer.

As one embodiment, the target threshold value is beamFailureInstanceMaxCount.

As one embodiment, the target threshold value is configured by the RRC parameter.

As one embodiment, the RRC parameter configuring the target threshold value comprises all or parts of information in the beamFailureInstanceMaxCount field of RadioLinkMonitoringConfig IE.

As one embodiment, the target timer is beamFailureDetectionTimer.

As one embodiment, the initial value of the target timer is a positive integer.

As one embodiment, the initial value of the target timer is a positive real number.

As one embodiment, the unit of the initial value of the target timer is a Qout,LR reporting period of a beam failure detection RS.

As one embodiment, the initial value of the target timer is configured by a higher layer parameter beamFailureDetectionTimer.

As one embodiment, the initial value of the target timer is configured by one IE.

As one embodiment, the name of the IE configuring the initial value of the target timer comprises RadioLinkMonitoring.

As one embodiment, when the beam failure recovery for the first serving cell is triggered, a beam failure recovery process for the first serving cell comprises sending a first signal.

As one embodiment, the first signal comprises at least one of a contention-based random access preamble, a BFR MAC CE, a truncated BFR MAC CE, an enhanced BFR MAC CE, or a truncated enhanced BFR MAC CE.

As one embodiment, the beam failure recovery (BFR) for the first serving cell comprises a random access process.

As one embodiment, the beam failure recovery (BFR) for the first serving cell comprises at least one of sending a random access preamble, sending a BFR MAC CE, sending a truncated BFR MAC CE, sending an enhanced BFR MAC CE, or sending a truncated enhanced BFR MAC CE.

As one embodiment, the random access preamble is a contention-based Random Access Preamble.

As one embodiment, the random access preamble is a contention-free random access preamble.

As one embodiment, the beam failure recovery (BFR) for the first serving cell comprises sending one of the BFR MAC CE, the truncated BFR MAC CE, the enhanced BFR MAC CE or the truncated enhanced BFR MAC CE.

As one embodiment, the beam failure recovery (BFR) for the first serving cell comprises sending a MAC CE whose name comprises BFR.

As one embodiment, the beam failure recovery process refers to Section 5.17 of 3GPP TS38.321.

As one embodiment, the beam failure recovery process refers to Section 6 of 3GPP TS38.213.

### Embodiment 12

Embodiment 12 illustrates a schematic diagram of triggering beam failure recovery according to another embodiment of the present application, as shown in FIG. 12.

In Embodiment 12, when radio link quality evaluated according to a first RS resource set is inferior to a reference threshold value, a physical layer of a first node sends to a higher layer a beam failure event indication for the first RS resource set; when the radio link quality evaluated according to the second RS resource set is inferior to the reference threshold value, the physical layer of the first node sends to the higher layer a beam failure event indication for the second RS resource set; a first counter is used for counting the beam failure event indication for the first RS resource set, and a second counter is used for counting the beam failure event indication for the second RS resource set; when a value of the first counter is equal to or greater than a first threshold value, beam failure recovery for the first RS resource set is triggered; and when a value of the second counter is equal to or greater than a second threshold value, beam failure recovery for the second RS resource set is triggered.

Typically, the beam failure event indication for the first RS resource set is sent from the physical layer to the higher layer within the first node.

Typically, the beam failure event indication for the second RS resource set is sent from the physical layer to the higher layer within the first node.

Typically, statistics of the beam failure event indication for the first RS resource set and statistics of the beam failure event indication for the second RS resource set are respectively performed.

Typically, a beam failure detection for the first RS resource set and a beam failure detection for the second RS resource set are respectively performed.

Typically, the beam failure recovery for the first RS resource set and the beam failure recovery for the second RS resource set are respectively triggered.

Typically, the first RS resource set and the second RS resource set are 2 beam failure detection RS sets, and the beam failure detection is performed per beam failure detection RS set.

Typically, the first RS resource set and the second RS resource set are 2 beam failure detection RS sets, and the beam failure recovery is performed per beam failure detection RS set.

Typically, the first RS resource set and the second RS resource set respectively correspond to two BFI_COUNTERs.

Typically, the first RS resource set corresponds to a first counter, and the second RS resource set corresponds to a second counter.

Typically, the sentence "when a value of a first counter is equal to or greater than a first threshold value" means: when and only when the value of the first counter is equal to or greater than the first threshold value.

Typically, the sentence "when a value of a first counter is equal to or greater than a first threshold value" means: in response to the value of the first counter being equal to or greater than the first threshold value.

Typically, the sentence "when a value of a second counter is equal to or greater than a second threshold value" means: when and only when the value of the second counter is equal to or greater than the second threshold value.

Typically, the sentence "when a value of a second counter is equal to or greater than a second threshold value" means: in response to the value of the second counter being equal to or greater than the second threshold value.

Typically, the first node maintains the first counter at an MAC layer, and the first node maintains the second counter at the MAC layer.

Typically, an MAC entity of the first node maintains the first counter, and the MAC entity of the first node maintains the second counter.

Typically, when the MAC entity of the first node receives the beam failure event indication for the first RS resource set from the physical layer, the first timer is started or restarted, and the value of the first counter is increased by 1; and whenever the MAC entity of the first node receives the beam failure event indication for the second RS resource set from the physical layer, the second timer is started or restarted, and the value of the second counter is increased by 1.

Typically, the first counter and the second counter are 2 BFI_COUNTERs.

Typically, when the first timer expires, the first counter is set as 0; and when the second timer expires, the second counter is set as 0.

As one embodiment, the first timer and the second timer are 2 beamFailureDetectionTimers.

Typically, an initial value of the first counter is 0, and an initial value of the second counter is 0.

As one embodiment, the first threshold value is a positive integer, and the second threshold value is a positive integer.

As one embodiment, the first threshold value and the second threshold value are respectively configured beamFailureInstanceMaxCount-r17.

As one embodiment, the name of the first threshold value comprises beamFailureInstanceMaxCount, and the name of the second threshold value comprises beamFailureInstanceMaxCount.

As one embodiment, the first threshold value and the second threshold value are respectively configured by an RRC parameter.

As one embodiment, the first threshold value and the second threshold value are the same.

As one embodiment, the first threshold value and the second threshold value are different.

As one embodiment, the first threshold value and the second threshold value are configured by parts or all of the fields in an RRC IE.

As one embodiment, an RRC message for configuring the first threshold value and the second threshold value comprises two beamFailureInstanceMaxCount-r17 fields of RadioLinkMonitoringConfig IE.

As one embodiment, the RRC message for configuring the first threshold value and the second threshold value respectively comprises parts or all of the information in the two failureDetectionSet1-r17 fields of RadioLinkMonitoringConfig IE.

As one embodiment, the RRC message for configuring the first threshold value and the second threshold value respectively comprises parts or all of the information in the field whose name comprises failureDetectionSet1 in RadioLinkMonitoringConfig IE; and the RRC message for configuring the first threshold value and the second threshold value respectively comprises parts or all of the information in the field with failureDetectionSet2 included in the name in RadioLinkMonitoringConfig IE.

As one embodiment, an initial value of the first timer and an initial value of the second timer are the same.

As one embodiment, the initial value of the first timer and the initial value of the second timer are different.

As one embodiment, the initial value of the first timer and the initial value of the second timer are respectively configured by the RRC parameter.

As one embodiment, the first timer and the second timer are respectively 2 beamFailureDetectionTimer-r17s.

As one embodiment, the names of the first timer and the second timer both comprise beamFailureDetectionTimer-r17.

As one embodiment, the initial value of the first timer is a positive integer, and the initial value of the second timer is a positive integer.

As one embodiment, the initial value of the first timer is a positive real number, and the initial value of the second timer is a positive real number.

As one embodiment, the unit of the initial value of the first timer and the unit of the initial value of the second timer are both the Qout,LR reporting period of the beam failure detection RS.

As one embodiment, the initial value of the first timer and the initial value of the second timer are respectively configured by 2 higher layer parameters beamFailureDetectionTimer-r17.

As one embodiment, the initial value of the first timer and the initial value of the second timer are respectively configured by 2 higher layer parameters with beamFailureDetectionTimer-r17 included in the name.

As one embodiment, the initial value of the first timer and the initial value of the second timer are configured by one IE.

As one embodiment, the name of the IE configuring the initial value of the first timer and the initial value of the second timer comprises RadioLinkMonitoring.

Typically, when the beam failure recovery for the first RS resource set and the beam failure recovery for the second RS resource set are both triggered, and the beam failure recovery processes of the first RS resource set or the second RS resource set are both not successfully completed, a random access process is initiated.

As one embodiment, the beam failure recovery (BFR) for the first RS resource set comprises sending one of a BFR MAC CE, a truncated BFR MAC CE, an enhanced BFR MAC CE or a truncated enhanced BFR MAC CE. The beam failure recovery (BFR) for the second RS resource set comprises sending one of the BFR MAC CE, the truncated BFR MAC CE, the enhanced BFR MAC CE, or the truncated enhanced BFR MAC CE.

As one embodiment, the beam failure recovery (BFR) for the first RS resource set comprises sending an MAC CE with BFR included in the name, and the beam failure recovery (BFR) for the second RS resource set comprises sending the MAC CE with BFR included in the name.

### Embodiment 13

Embodiment 13 illustrates a structural block diagram of a processing device for use in a first node device according to one embodiment of the present application, as shown in FIG. 13. In FIG. 13, a processing device 1200 in a first node device comprises a first receiver 1201 or at least the first receiver 1201 in a first transmitter 1202.

As one embodiment, the first node device is user equipment.

As one embodiment, the first node device is a relay node device.

As one embodiment, the first receiver 1201 comprises at least one of {the antenna 452, the receiving device 454, the receiving processor 456, the multi-antenna receiving processor 458, the controller/processor 459, the memory 460, and data source 467} in Embodiment 4.

As one embodiment, the first transmitter 1202 comprises at least one of {the antenna 452, the transmitting device 454, the transmitting processor 468, the multi-antenna transmitting processor 457, the controller/processor 459, the memory 460, and the data source 467} in Embodiment 4.

The first receiver 1201 receives a reference information block and a first information block;
in Embodiment 13, the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, the first node device comprises:
a first receiver 1201 for receiving first signaling; and
a first transmitter 1202 for sending a first signal in a first time-frequency resource group;
wherein the first signaling indicates scheduling information of the first signal, the first time-frequency resource group belongs to the first time-frequency resource set, and at least one symbol in the first time-frequency resource group is configured by a higher layer parameter as a DL symbol.

As one embodiment, the air interface resource comprises a time domain resource, and the first time-frequency resource set comprises at least one symbol in a time domain; and any monitored PDCCH candidate in any CORESET in the first CORESET group and the first time-frequency resource set are orthogonal in the time domain.

As one embodiment, the first CORESET group is determined by sorting CORESETs in the first CORESET pool according to a first rule; and the first rule depends on the relationship between the air interface resource occupied by the monitored PDCCH candidate in the CORESET in the first CORESET pool and the first time-frequency resource set.

As one embodiment, the following is comprised: when a value of a target counter is equal to or greater than a target threshold value, triggering beam failure recovery for the first serving cell;
wherein the first BWP is one BWP of the first serving cell; when radio link quality evaluated according to the first RS resource set is inferior to a reference threshold value, a physical layer of a first node sends to the higher layer a beam failure event indication for the first serving cell; and the target counter is used for counting the beam failure event indication for the first serving cell.

As one embodiment, the beam failure recovery is performed in the first receiver 1201 and the first transmitter 1202.

As one embodiment, the beam failure recovery is performed in at least the first transmitter 1202 of the first receiver 1201 or the first transmitter 1202.

As one embodiment, the beam failure recovery is performed in at least one of the first receiver 1201 or the first transmitter 1202.

As one embodiment, the radio link quality evaluation of the first BWP comprises: respectively evaluating the radio link quality according to the first RS resource set and the second RS resource set; the reference information block is used for configuring a second CORESET pool on the first BWP, the second RS resource set depends on a TCI state of a second CORESET group, and the second CORESET group comprises at least one CORESET in the second CORESET pool; and the second CORESET group at least depends on a relationship between an air interface resource occupied by a monitored PDCCH candidate in a CORESET in the second CORESET pool and the first time-frequency resource set.

As one embodiment, the radio link quality evaluation of the first BWP comprises: respectively evaluating the radio link quality according to the first RS resource set and the second RS resource set; the second RS resource set depends on a TCI state of a second CORESET group, and the second CORESET group comprises at least one CORESET in the first CORESET pool; and the second CORESET group at least depends on the relationship between the air interface resource occupied by the monitored PDCCH candidate in the CORESET in the first CORESET pool and the first time-frequency resource set.

As one embodiment, when the radio link quality evaluated according to the first RS resource set is inferior to the reference threshold value, the physical layer of the first node sends to the higher layer the beam failure event indication for the first RS resource set; when the radio link quality evaluated according to the second RS resource set is inferior to the reference threshold value, the physical layer of the first node sends to the higher layer a beam failure event indication for the second RS resource set; a first counter is used for counting the beam failure event indication for the first RS resource set, and a second counter is used for counting the beam failure event indication for the second RS resource set; when a value of the first counter is equal to or greater than a first threshold value, beam failure recovery for the first RS resource set is triggered; and when a value of the second counter is equal to or greater than a second threshold value, beam failure recovery for the second RS resource set is triggered.

### Embodiment 14

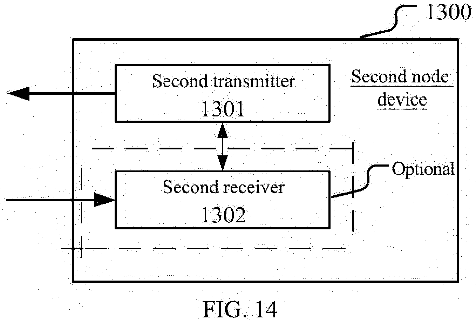

Embodiment 14 illustrates a structural block diagram of a processing device for use in a second node device according to one embodiment of the present application, as shown in FIG. 14. In FIG. 14, a processing device 1300 in a second node device comprises a second transmitter 1301 or at least the second transmitter 1301 in a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {the antenna 420, the transmitting device 418, the transmitting processor 416, the multi-antenna transmitting processor 471, the controller/processor 475, and the memory 476} in Embodiment 4.

As one embodiment, the second receiver 1302 comprises at least one of {the antenna 420, the receiving device 418, the receiving processor 470, the multi-antenna receiving processor 472, the controller/processor 475, and the memory 476} in Embodiment 4.

The second transmitter 1301 sends a reference information block and a first information block;
in Embodiment 14, the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

As one embodiment, the first node device comprises:
a second transmitter 1301 for sending first signaling; and
a second receiver 1302 for receiving a first signal in a first time-frequency resource group;
wherein the first signaling indicates scheduling information of the first signal, the first time-frequency resource group belongs to the first time-frequency resource set, and at least one symbol in the first time-frequency resource group is configured by a higher layer parameter as a DL symbol.

As one embodiment, the air interface resource comprises a time domain resource, and the first time-frequency resource set comprises at least one symbol in a time domain; and any monitored PDCCH candidate in any CORESET in the first CORESET group and the first time-frequency resource set are orthogonal in the time domain.

As one embodiment, the first CORESET group is determined by sorting CORESETs in the first CORESET pool according to a first rule; and the first rule depends on the relationship between the air interface resource occupied by the monitored PDCCH candidate in the CORESET in the first CORESET pool and the first time-frequency resource set.

As one embodiment, a recipient of the first information block triggers beam failure recovery for a first serving cell when a value of a target counter is equal to or greater than a target threshold value, wherein the first BWP is one BWP of the first serving cell; when radio link quality evaluated according to the first RS resource set is inferior to a reference threshold value, a physical layer of the recipient of the first information block sends to a higher layer a beam failure event indication for the first serving cell; and the target counter is used for counting the beam failure event indication for the first serving cell.

As one embodiment, the second transmitter 1301 and the second receiver 1302 are used for performing the beam failure recovery.

As one embodiment, the beam failure recovery is performed in at least the second receiver 1302 of the second transmitter 1301 or the second receiver 1302.

As one embodiment, the beam failure recovery is performed in at least one of the second transmitter 1301 or the second receiver 1302.

As one embodiment, the radio link quality evaluation of the first BWP comprises: respectively evaluating the radio link quality according to the first RS resource set and the second RS resource set; the reference information block is used for configuring a second CORESET pool on the first BWP, the second RS resource set depends on a TCI state of a second CORESET group, and the second CORESET group comprises at least one CORESET in the second CORESET pool; and the second CORESET group at least depends on a relationship between an air interface resource occupied by a monitored PDCCH candidate in a CORESET in the second CORESET pool and the first time-frequency resource set.

As one embodiment, the radio link quality evaluation of the first BWP comprises: respectively evaluating the radio link quality according to the first RS resource set and the second RS resource set; the second RS resource set depends on a TCI state of a second CORESET group, and the second CORESET group comprises at least one CORESET in the first CORESET pool; and the second CORESET group at least depends on the relationship between the air interface resource occupied by the monitored PDCCH candidate in the CORESET in the first CORESET pool and the first time-frequency resource set.

As one embodiment, when the radio link quality evaluated according to the first RS resource set is inferior to the reference threshold value, the physical layer of the recipient of the first information block sends to the higher layer the beam failure event indication for the first RS resource set; when the radio link quality evaluated according to the second RS resource set is inferior to the reference threshold value, the physical layer of the recipient of the first information block sends to the higher layer the beam failure event indication for the second RS resource set; a first counter is used for counting the beam failure event indication for the first RS resource set, and a second counter is used for counting the beam failure event indication for the second RS resource set; when a value of the first counter is equal to or greater than a first threshold value, beam failure recovery for the first RS resource set is triggered; and when a value of the second counter is equal to or greater than a second threshold value, beam failure recovery for the second RS resource set is triggered.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The user equipment, the terminal and the UE in the present application include but are not limited to a drone, a communication module on the drone, a remote-controlled airplane, an aircraft, a small airplane, a mobile phone, a tablet computer, a notebook, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base stations or the system devices in the present application include but are not limited to a macrocell base station, a microcell base station, a Femtocell, a relay base station, a gNB (NR node B) NR node B, a TRP (Transmitter Receiver Point) and other wireless communication devices.

The above is only a preferred embodiment of the present application and is not intended to limit the scope of protection of the present application. Any changes and modifications made based on the embodiments described in the specification, if similar partial or full technical effects can be obtained, should be deemed to be obvious and fall within the scope of protection of the present invention.

## Claims

1. A first node device used for wireless communication, comprising:
a first receiver for receiving a reference information block and a first information block;
wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

2. The first node device according to claim 1, comprising:
the first receiver for receiving first signaling; and
a first transmitter for sending a first signal in a first time-frequency resource group;
wherein the first signaling indicates scheduling information of the first signal, the first time-frequency resource group belongs to the first time-frequency resource set, and at least one symbol in the first time-frequency resource group is configured by a higher layer parameter as a DL symbol.

3. The first node device according to claim 1 or 2, wherein the air interface resource comprises a time domain resource, and the first time-frequency resource set comprises at least one symbol in a time domain; and any monitored PDCCH candidate in any CORESET in the first CORESET group and the first time-frequency resource set are orthogonal in the time domain.

4. The first node device according to claim 1 or 2, wherein the first CORESET group is determined by sorting CORESETs in the first CORESET pool according to a first rule; and the first rule depends on the relationship between the air interface resource occupied by the monitored PDCCH candidate in the CORESET in the first CORESET pool and the first time-frequency resource set.

5. The first node device according to any one of claims 1 to 4, comprising:
when a value of a target counter is equal to or greater than a target threshold value, triggering beam failure recovery for a first serving cell;
wherein the first BWP is one BWP of the first serving cell; when radio link quality evaluated according to the first RS resource set is inferior to a reference threshold value, a physical layer of a first node sends to a higher layer a beam failure event indication for the first serving cell; and the target counter is used for counting the beam failure event indication for the first serving cell.

6. The first node device according to any one of claims 1 to 4, wherein the radio link quality evaluation of the first BWP comprises: respectively evaluating radio link quality according to the first RS resource set and a second RS resource set; the reference information block is used for configuring a second CORESET pool on the first BWP, the second RS resource set depends on a TCI state of a second CORESET group, and the second CORESET group comprises at least one CORESET in the second CORESET pool; and the second CORESET group at least depends on a relationship between an air interface resource occupied by a monitored PDCCH candidate in a CORESET in the second CORESET pool and the first time-frequency resource set.

7. The first node device according to any one of claims 1 to 4, wherein the radio link quality evaluation of the first BWP comprises: respectively evaluating radio link quality according to the first RS resource set and a second RS resource set; the second RS resource set depends on a TCI state of a second CORESET group, and the second CORESET group comprises at least one CORESET in the first CORESET pool; and the second CORESET group at least depends on the relationship between the air interface resource occupied by the monitored PDCCH candidate in the CORESET in the first CORESET pool and the first time-frequency resource set.

8. A second node device used for wireless communication, comprising:
a second transmitter for sending a reference information block and a first information block;
wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

9. The second node device according to claim 8, comprising:
the second transmitter for sending first signaling; and
a second receiver for receiving a first signal in a first time-frequency resource group;
wherein the first signaling indicates scheduling information of the first signal, the first time-frequency resource group belongs to the first time-frequency resource set, and at least one symbol in the first time-frequency resource group is configured by a higher layer parameter as a DL symbol.

10. The second node device according to claim 8 or 9, wherein the air interface resource comprises a time domain resource, and the first time-frequency resource set comprises at least one symbol in a time domain; and any monitored PDCCH candidate in any CORESET in the first CORESET group and the first time-frequency resource set are orthogonal in the time domain.

11. The second node device according to claim 8 or 9, wherein the first CORESET group is determined by sorting CORESETs in the first CORESET pool according to a first rule; and the first rule depends on the relationship between the air interface resource occupied by the monitored PDCCH candidate in the CORESET in the first CORESET pool and the first time-frequency resource set.

12. The second node device according to any one of claims 8 to 11, wherein a recipient of the first information block triggers beam failure recovery for a first serving cell when a value of a target counter is equal to or greater than a target threshold value, wherein the first BWP is one BWP of the first serving cell; when radio link quality evaluated according to the first RS resource set is inferior to a reference threshold value, a physical layer of the recipient of the first information block sends to a higher layer a beam failure event indication for the first serving cell; and the target counter is used for counting the beam failure event indication for the first serving cell.

13. The second node device according to any one of claims 8 to 11, wherein the radio link quality evaluation of the first BWP comprises: respectively evaluating radio link quality according to the first RS resource set and a second RS resource set; the reference information block is used for configuring a second CORESET pool on the first BWP, the second RS resource set depends on a TCI state of a second CORESET group, and the second CORESET group comprises at least one CORESET in the second CORESET pool; and the second CORESET group at least depends on a relationship between an air interface resource occupied by a monitored PDCCH candidate in a CORESET in the second CORESET pool and the first time-frequency resource set.

14. The second node device according to any one of claims 8 to 11, wherein the radio link quality evaluation of the first BWP comprises: respectively evaluating radio link quality according to the first RS resource set and a second RS resource set; the second RS resource set depends on a TCI state of a second CORESET group, and the second CORESET group comprises at least one CORESET in the first CORESET pool; and the second CORESET group at least depends on the relationship between the air interface resource occupied by the monitored PDCCH candidate in the CORESET in the first CORESET pool and the first time-frequency resource set.

15. A method for a first node used for wireless communication, comprising:
receiving a reference information block and a first information block;
wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

16. The method according to claim 15, comprising:
receiving first signaling; and
sending a first signal in a first time-frequency resource group;
wherein the first signaling indicates scheduling information of the first signal, the first time-frequency resource group belongs to the first time-frequency resource set, and at least one symbol in the first time-frequency resource group is configured by a higher layer parameter as a DL symbol.

17. The method according to claim 15 or 16, wherein the air interface resource comprises a time domain resource, and the first time-frequency resource set comprises at least one symbol in a time domain; and any monitored PDCCH candidate in any CORESET in the first CORESET group and the first time-frequency resource set are orthogonal in the time domain.

18. The method according to claim 15 or 16, wherein the first CORESET group is determined by sorting CORESETs in the first CORESET pool according to a first rule; and the first rule depends on the relationship between the air interface resource occupied by the monitored PDCCH candidate in the CORESET in the first CORESET pool and the first time-frequency resource set.

19. The method according to any one of claims 15 to 18, comprising:
when a value of a target counter is equal to or greater than a target threshold value, triggering beam failure recovery for a first serving cell;
wherein the first BWP is one BWP of the first serving cell; when radio link quality evaluated according to the first RS resource set is inferior to a reference threshold value, a physical layer of a first node sends to the higher layer a beam failure event indication for the first serving cell; and the target counter is used for counting the beam failure event indication for the first serving cell.

20. The method according to any one of claims 15 to 18, wherein the radio link quality evaluation of the first BWP comprises: respectively evaluating radio link quality according to the first RS resource set and a second RS resource set; the reference information block is used for configuring a second CORESET pool on the first BWP, the second RS resource set depends on a TCI state of a second CORESET group, and the second CORESET group comprises at least one CORESET in the second CORESET pool; and the second CORESET group at least depends on a relationship between an air interface resource occupied by a monitored PDCCH candidate in a CORESET in the second CORESET pool and the first time-frequency resource set.

21. The method according to any one of claims 15 to 18, wherein the radio link quality evaluation of the first BWP comprises: respectively evaluating a radio link quality according to the first RS resource set and a second RS resource set; the second RS resource set depends on a TCI state of a second CORESET group, and the second CORESET group comprises at least one CORESET in the first CORESET pool; and the second CORESET group at least depends on the relationship between the air interface resource occupied by the monitored PDCCH candidate in the CORESET in the first CORESET pool and the first time-frequency resource set.

22. A method for a second node used for wireless communication, comprising:
sending a reference information block and a first information block;
wherein the reference information block is used for configuring a first CORESET pool on a first BWP, and the first CORESET pool comprises at least one CORESET; a first RS resource set is used for radio link quality evaluation of the first BWP, the first RS resource set depends on a TCI state of a first CORESET group, and the first CORESET group comprises the at least one CORESET in the first CORESET pool; the first information block is used for determining a first time-frequency resource set, and the first time-frequency resource set comprises at least one subcarrier in the first BWP in a frequency domain; and the first CORESET group at least depends on a relationship between an air interface resource occupied by a monitored PDCCH candidate in a CORESET in the first CORESET pool and the first time-frequency resource set.

23. The method for the second node according to claim 22, comprising:
sending first signaling; and
receiving a first signal in a first time-frequency resource group;
wherein the first signaling indicates scheduling information of the first signal, the first time-frequency resource group belongs to the first time-frequency resource set, and at least one symbol in the first time-frequency resource group is configured by a higher layer parameter as a DL symbol.

24. The method according to claim 22 or 23, wherein the air interface resource comprises a time domain resource, and the first time-frequency resource set comprises at least one symbol in a time domain; and any monitored PDCCH candidate in any CORESET in the first CORESET group and the first time-frequency resource set are orthogonal in the time domain.

25. The method according to claim 22 or 23, wherein the first CORESET group is determined by sorting CORESETs in the first CORESET pool according to a first rule; and the first rule depends on the relationship between the air interface resource occupied by the monitored PDCCH candidate in the CORESET in the first CORESET pool and the first time-frequency resource set.

26. The method according to any one of claims 22 to 25, wherein a recipient of the first information block triggers beam failure recovery for a first serving cell when a value of a target counter is equal to or greater than a target threshold value, wherein the first BWP is one BWP of the first serving cell; when radio link quality evaluated according to the first RS resource set is inferior to a reference threshold value, a physical layer of the recipient of the first information block sends to a higher layer a beam failure event indication for the first serving cell; and the target counter is used for counting the beam failure event indication for the first serving cell.

27. The method according to any one of claims 22 to 25, wherein the radio link quality evaluation of the first BWP comprises: respectively evaluating a radio link quality according to the first RS resource set and a second RS resource set; the reference information block is used for configuring a second CORESET pool on the first BWP, the second RS resource set depends on a TCI state of a second CORESET group, and the second CORESET group comprises at least one CORESET in the second CORESET pool; and the second CORESET group at least depends on a relationship between an air interface resource occupied by a monitored PDCCH candidate in a CORESET in the second CORESET pool and the first time-frequency resource set.

28. The method according to any one of claims 22 to 25, wherein the radio link quality evaluation of the first BWP comprises: respectively evaluating a radio link quality according to the first RS resource set and a second RS resource set; the second RS resource set depends on a TCI state of a second CORESET group, and the second CORESET group comprises at least one CORESET in the first CORESET pool; and the second CORESET group at least depends on the relationship between the air interface resource occupied by the monitored PDCCH candidate in the CORESET in the first CORESET pool and the first time-frequency resource set.
